# EUROPÄISCHE PATENTSCHRIFT

(11) **EP 3 596 653 B1**
(45) Veröffentlichungstag und Bekanntmachung des Hinweises auf die Patenterteilung: **17.02.2021**
(21) Anmeldenummer: 18711920.1
(22) Anmeldetag: 16.03.2018
(51) Int. Cl.: G06F 21/64, H04L 29/06, H04L 9/32, G06Q 30/00, G06Q 50/18

(54) **AUSSTELLEN VIRTUELLER DOKUMENTE IN EINER BLOCKCHAIN**
ISSUING VIRTUAL DOCUMENTS IN A BLOCK CHAIN
ÉMISSION DE DOCUMENTS VIRTUELS DANS UNE CHAÎNE DE BLOCS

(30) Priorität: 17.03.2017 DE 102017204536
(43) Veröffentlichungstag der Anmeldung: 22.01.2020
(73) Patentinhaber: Bundesdruckerei GmbH, 10969 Berlin (DE)
(72) Erfinder: RÜCKRIEMEN, Jörg, 10999 Berlin (DE); EHREKE, Jens, 12587 Berlin (DE)
(74) Vertreter: Richardt Patentanwälte PartG mbB
(86) Internationale Anmeldenummer: PCT/EP2018/056619
(87) Internationale Veröffentlichungsnummer: WO 2018/167252

(56) Entgegenhaltungen:
- WO-A1-2016/170538
- GB-A- 2 539 430
- US-A1- 2016 261 685

## Beschreibung

Die Erfindung betrifft ein Verfahren zum Ausstellen eines virtuellen Dokuments in einer Blockchain sowie ein System zur Ausführung des Verfahrens.

Dokumente, wie beispielsweise Zeugnisse, umfassen meist einen Dokumentenkörper, beispielsweise aus Papier, auf welchem sie ausgestellt werden und können mit modernen Bildbearbeitungsprogrammen und Farbdruckern leicht gefälscht werden. Insbesondere stellt sich die Problematik fehlender Fälschungssicherheit, wenn zusätzlich zu einem Original des Dokuments weitere Ausfertigungen wie etwa Abschriften, Zweitschriften und Kopien benötigt werden. Deren Authentizität wird üblicherweise durch eine Beglaubigung belegt. Bei einer amtlichen Beglaubigung handelt es sich um eine amtliche Bescheinigung der Richtigkeit einer Abschrift, Zweitschrift, Kopie oder dergleichen eines Dokuments. Eine Beglaubigung beruht im Allgemeinen lediglich auf einer kurzen Sichtprüfung und ist bereits aus diesem Grund unsicher. Hinzu kommt, dass eine Beglaubigung bereits ordnungsgemäß ist, wenn der Beglaubigungsvermerk mit einem Dienstsiegel, etwa als Stempelabdruck, versehen ist und ein Beglaubigungsvermerk vom Beglaubigenden unterschrieben wurde. Ein Beglaubigungsvermerk umfasst dabei die Feststellung, dass die beglaubigte Abschrift/Kopie mit einem vorgelegten Originaldokument übereinstimmt. Zudem kann der Beglaubigungsvermerk eine genaue Bezeichnung des Originaldokuments, dessen Abschrift/Kopie beglaubigt wird, umfassen. Eine solche Beglaubigung lässt sich mit modernen Bildbearbeitungsprogrammen ebenfalls leicht fälschen.

Verfahren mit einem maschinenlesbaren aufgedruckten Siegel in Form eines QR-Codes erhöhen zwar die Sicherheit, können aber aufgrund des geringen Umfangs an Daten, welche ein QR-Code umfassen kann, allenfalls bei einseitigen Dokumenten mit wenigen Daten verwendet werden.

Darüber hinaus ist das Aufbringen von Sicherheitsmerkmalen auf Dokumentenkörpern, beispielsweise aus Papier logistisch ineffizient. Blankobögen mit den entsprechenden Sicherheitsmerkmalen, wie sie beispielsweise auch für Ausweisdokumente oder Geldscheine verwendet werden, müssen physisch verteilt und gegen Missbrauch bzw. Diebstahl geschützt werden. Zudem wachsen die Kosten für die Implementierung der Sicherheitsmerkmale linear mit der Anzahl der Zeugnisse. Dabei beruht ein Grundprinzip der verwendeten Sicherheitsmerkmale darauf, dass Sicherheit dadurch erreicht wird, dass eine 1:1 -Kopie der Sicherheitsmerkmale zu kostspielig und damit wirtschaftlich uninteressant ist. Schließlich sind diese Sicherheitskonzepte nicht auf digitale Güter anwendbar.

Die US 2016 / 0 261 685 A1 beschreibt Systeme und Verfahren, die es ermöglichen, eine Nachricht unabhängig von einer zentralisierten Ressource für ein Abrufen zu einem zukünftigen Zeitpunkt zu übertragen. Ein Computergerät empfängt eine konfigurationsbezogene Nachricht über eine Blockkette, die von mehreren dezentralen Knoten verwaltet wird. Das Gerät führt nach Überprüfung der Authentizität der Nachricht die in der Nachricht angegebenen zurückgestellten Anweisungen aus. Die Anweisungen können eine Funktionalität oder keine Funktionalität in dem Gerät zulassen. Die Anweisungen geben an, dass ein intelligentes Paket es dem Endbenutzer erlauben soll, auf Inhalte des Pakets zuzugreifen, oder keinen Zugriff auf die Inhalte zu erlauben.

Die WO 2016 / 170 538 A1 beschreibt ein dezentrales System und ein Verfahren zum Verwalten elektronischer Titeldokumente (EDTs). Das Verfahren umfasst: durch einen Ausgabeknoten: Erzeugen eines Root-Unique-Objekts (RUO), das dem Ausgabeknoten zugeordnet ist und als Zeiger auf eine in der DTDB geführte Blockchain verwendbar ist, wodurch für eine gegebenes EDT eine Besitzkette initiiert wird, die durch eine mit dem RUO verknüpfte ID (RUOID) gekennzeichnet ist; und Einbetten eines Datenobjekts mit Informationen über die RUOID in das gegebene EDT und digitales Signieren des EDT mit dem eingebetteten Datenobjekt in einer Weise, die es einem autorisierten Knoten ermöglicht, das EDT zu verifizieren und das Datenobjekt zu extrahieren, wodurch ein erzeugtes EDT entsteht; durch jeden Knoten, der gewärtig im Besitz des erzeugten EDT ist: Übertragen des Besitzes des erzeugten EDT an einen Empfängerknoten, welcher der nächste Knoten ist, der in den Besitz des erzeugten EDT gelangt, wobei das Übertragen des Besitzes umfasst: Erhalten eines ersten eindeutigen Objekts von der Blockkette, das von einem Knoten erzeugt ist, der den Besitz an dem EDT an den ersten Knoten übertragen hat; Verwenden des ersten eindeutigen Objekts, um ein zweites eindeutiges Objekt zu erzeugen, das das erste eindeutige Objekt angibt, den Empfängerknoten und in die Blockchain aufnehmbar ist; Ermöglichen eines Aufnehmens des erzeugten nächsten eindeutigen Objekts in die Blockchain; und Weiterleiten der erzeugten EDT an den Empfängerknoten über ein digitales Medium; durch jeden Knoten, in Reaktion auf ein Erlangen des Besitzes an dem erzeugten EDT: Validieren der empfangenen erzeugten EDT; Verwenden einer in das erzeugte EDT eingebetteten RUO_ID, um die Besitzkette zu validieren; und Übertragen des Besitzes an dem erzeugten EDT an den Empfängerknoten.

Die GB 2 539 430 A beschreibt ein digitales Token- oder Geldwechselsystem und ein Verfahren zum Codieren eines oder mehrerer digitaler Token, wobei das System ein Peer-to-Peer-Netzwerk mit einer Mehrzahl von Nutzerendgeräten, die von jeweiligen Nutzern betrieben werden, und einer Mehrzahl von Servern umfasst. Für jeden Nutzer und Server im System wird ein entsprechendes kryptografisches Schlüsselpaar mit mindestens einem öffentlichen Schlüssel instanziiert. Jeder Nutzer im System registriert seinen jeweiligen öffentlichen Schlüssel und eine jeweilige eindeutige Kennung bei mindestens einem Server und fordert von diesem Server die Instanziierung eines oder mehrerer digitaler Token an. Digitale Token werden in dem Server instanziiert und umfassen eine Mehrzahl von Codes, die eine Blockchain definieren. Der Server signiert Token basierend auf der Mehrzahl von Codes mit seinem privaten Schlüssel digital. Die digital signierten Token werden an die Mehrzahl von entfernten Servern rundgesendet, wo an jedem Server die Blockchain des übertragenen Tokens zum Validieren der Übertragung verarbeitet wird. Das Verarbeiten der Blockchain umfasst das Berechnen eines ersten und zweiten Hash und das Vergleichen des zweiten Hash mit einer digitalen Signatur. Das Token wird erneut instanziiert, wenn die Blockchain einen bestimmten Schwellenwert überschreitet.

Die CN 106 412 037 A beschreibt ein elektronisches Sicherheitsdateiverarbeitungsverfahren auf der Basis einer Blockverbindungsstruktur. Das Verfahren umfasst die folgenden Schritte: ein Mitgliedsknoten in einer Blockverbindung, die aus einem Hauptknoten und mindestens einem Mitgliedsknoten besteht, erstellt eine Anforderung zur Erzeugung einer elektronischen Sicherheitsdatei basierend auf dem Auftreten eines Auslöseereignisses und sendet die Anforderung zur Erzeugung der elektronischen Sicherheitsdatei an den Hauptknoten; der Hauptknoten erzeugt eine elektronische Sicherheitsdatei basierend auf der empfangenen Anforderung zur Erzeugung der elektronischen Sicherheitsdatei und überträgt die erzeugte elektronisehe Sicherheitsdatei an den Mitgliedsknoten, der durch die Anforderung zur Erzeugung der elektronischen Sicherheitsdatei spezifiziert wird.

Die US 2016 / 0 212 146 A1 beschreibt Systeme und Verfahren, welche eine Blocckette ("Blockchain") verwenden, um das Einrichten von Dateidaten und die Abwesenheit von Manipulationen zu ermöglichen, selbst für Dokumente, die geheim gehalten werden, und solche, die in unkontrollierten Umgebungen gespeichert sind, was jedoch kein Vertrauen in eine Zeitstempelautorität oder einen Dokumentarchivierungsdienst erfordert. Eine vertrauenswürdige Zeitstempelautorität (TTSA) kann verwendet werden, aber selbst wenn die TTSA ihre Glaubwürdigkeit verliert oder ein Herausforderer es ablehnt, die Gültigkeit eines Zeitstempels anzuerkennen, kann ein Datum für ein elektronisches Dokument noch festgelegt werden. Es werden Systeme und Verfahren beschrieben, die ein Erkennen von Dateivervielfältigungen in großen Dokumentensammlungen ermöglichen, wodurch die Suche nach Dokumenten innerhalb der großen Sammlung verbessert werden kann.

Die US 2017 / 0 033 932 A1 beschreibt ein Erweitern mindestens eines Knotens in einer verteilten Hashbaumverifizierungsinfrastruktur um eine Kennung einer Entität in einem Registrierungspfad. Eine Datensignatur, die Parameter für eine Neuberechnung eines Verifizierungswerts enthält und die einem digitalen Eingabedatensatz zugeordnet ist, enthält daher auch Daten, die mindestens eine Entität im Hashbaumpfad identifizieren, die für ihre anfängliche Registrierung in der Infrastruktur verwendet wird. Ein oberster Wert der Hashbaumverifizierungsinfrastruktur wird als eine Transaktion oder als Teil einer Transaktion in eine Blockchain eingegeben.

Die US 2016 / 0 330 035 A1 beschreibt Systeme und Verfahren zum Verwalten der Identität eines Benutzers, zum Verwalten der Identität des Benutzers in einer öffentlichen Speichereinrichtung und zum Zertifizieren ausstehender Transaktionen für einen Benutzer. Das Verfahren umfasst ein Empfangen von persönlichen Daten, die den Benutzer identifizieren, an einem Eingabegerät. Die persönlichen Daten werden als Eingabedaten dargestellt. Das Eingabegerät ist so konfiguriert, dass es eine Hash-Funktion verarbeitet, um einen Hash-Wert und eine benutzerzugängliche Schnittstelle zum Übertragen des Hash-Werts und eines öffentlichen Schlüssels des Benutzers der öffentlichen Speichereinrichtung, z. B. Blockkette, bereitzustellen und zum Empfangen einer Transaktionsnummer, die dem Hash-Wert und dem öffentlichen Schlüssel entspricht, von der öffentlichen Speichereinrichtung. Das Eingabegerät ist dazu konfiguriert, dass es den Hash-Wert, einen Zeitstempel und die Transaktionsnummer mit einem öffentlichen Schlüssel einer Zertifizierungseinheit verschlüsselt, um der Zertifizierungseinheit benutzerzertifizierbare Daten bereitzustellen. Die Zertifizierungsstelle ist dazu konfiguriert, auf die öffentliche Speichereinrichtung zuzugreifen, um den Benutzer zu verifizieren.

BERGMANN, Christoph: "Notare und Banken, Ausweise und Börsen", in Bitcoinblog, 8. Dezember 2015. URL: https://bitcoinblog.de/2015/12/08/notareundbanken-ausweise-und-boersen, beschreibt Projekten, die das Blockchain-Prinzip auf unterschiedliche Bereiche anwenden, nämlich Notare, Banken, Börsen, Identifizierung. Identitäten werden durch eine Blockchain verwalten, wobei über ein Factom-Protokoll Ausweisdaten in der Blockchain abgespeichert werden und dem Kunden eine digitale Ausweiskarte zur Verfügung gestellt wird.

"Does notarization on the blockchain actually work?", in: Decentralize.today, 25. Januar 2017. URL: https://decentralize.today/does-notarization-on-theblockchain-actually-work-d8006443cOb9, beschreibt Dienste, welche ein Beglaubigen von Dateien unter Verwendung einer Blockchain beschreiben.

CROSBY, M. et al.: "Blockchain Technology, Beyond Bitcoin", in: Sutardja Center for Entrepreneurship & Technology, Technical Report, 16. Oktober 2015. URL: https://pdfs.semanticscholar.org/4b65/d3eda63fc18303dfbc071fe ceOe276a7a 16c.pdf, ist ein Whitepaper, welches die Blockchain-Technologie und einige spezifische Anwendungen im Finanz- und Nichtfinanzsektor beschreibt.

Der Erfindung liegt demgegenüber die Aufgabe zugrunde, ein effizientes und sicheres Verfahren zum Ausstellen einer virtuellen Version eines Dokuments zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Ausstellen eines virtuellen Dokuments mittels eines ersten Computersystems eines Ausstellers. Das erste Computersystem umfasst einen Speicher, in welchem ein öffentlicher kryptographischer Schlüssel eines dem Aussteller zugeordneten asymmetrischen Schlüsselpaars gespeichert ist. In einem geschützten Speicherbereich des Speichers ist ein privater kryptographischer Schlüssel des asymmetrischen Schlüsselpaars des Ausstellers gespeichert. Das erste Computersystem umfasst ferner eine Kommunikationsschnittstelle zur Kommunikation über ein Netzwerk.

Das virtuelle Dokument wird unter Verwendung einer Blockchain ausgestellt. Die Blockchain umfasst in einem Block ein Programmmodul mit ersten und zweiten Programminstruktionen. Durch Ausführen der Programminstruktionen werden dem Programmmodul zugeordnete Einträge in der Blockchain erzeugt.

Das Verfahren zum Ausstellen des virtuellen Dokuments umfasst:
- Erstellen einer Registrierungsanfrage durch das erste Computersystem, wobei die Registrierungsanfrage den öffentlichen kryptographischen Schlüssel des Ausstellers umfasst und das Programmmodul identifiziert,
- Senden der Registrierungsanfrage durch das erste Computersystem über das Netzwerk an einen ersten Blockchain-Server, wobei der erste Blockchain-Server dazu konfiguriert ist, Blöcke der Blockchain zu erzeugen,
- Empfangen der Registrierungsanfrage durch den ersten Blockchain-Server,
- Ausführen der ersten Programminstruktionen des durch die Registrierungsanfrage identifizierten Programmmoduls durch den ersten Blockchain-Server, wobei das Ausführen der ersten Programminstruktionen ein Prüfen der Gültigkeit der Registrierungsanfrage umfasst und, im Falle einer gültigen Registrierungsanfrage, zum Registrieren des öffentlichen kryptographischen Schlüssels des Ausstellers ein Erzeugen eines ersten zusätzlichen Blocks der Blockchain, wobei der erzeugte erste Block einen dem Programmmodul zugeordneten ersten Eintrag mit dem öffentlichen kryptographischen Schlüssel des Ausstellers umfasst.

Ferner umfasst das Verfahren:
- Empfangen einer Anfrage durch das erste Computersystem zum Ausstellen des virtuellen Dokuments,
- Erstellen des virtuellen Dokuments durch das erste Computersystem,
- Berechnen eines ersten Hashwerts des virtuellen Dokuments durch das erste Computersystem,
- Erstellen einer mit dem privaten kryptographischen Schlüssel des Ausstellers signierten Eintragungsanfrage durch das erste Computersystem, wobei die Eintragungsanfrage den ersten Hashwert umfasst und das Programmmodul identifiziert,
- Senden der signierten Eintragungsanfrage durch das erste Computersystem über das Netzwerk an einen zweiten Blockchain-Server, welcher dazu konfiguriert ist, Blöcke der Blockchain zu erzeugen,
- Empfangen der signierten Eintragungsanfrage durch den zweiten Blockchain-Server,
- Ausführen der zweiten Programminstruktionen des durch die signierte Eintragungsanfrage identifizierten Programmmoduls durch den zweiten Blockchain-Server, wobei das Ausführen der zweiten Programminstruktionen ein Prüfen der Signatur der Eintragungsanfrage unter Verwendung des in der Blockchain registrierten öffentlichen kryptographischen Schlüssels des Ausstellers umfasst, und, im Falle einer gültigen Signatur, zum Ausstellen des virtuellen Dokuments ein Erzeugen eines zweiten zusätzlichen Blocks der Blockchain, wobei der erzeugte zweite Block einen dem Programmmodul zugeordneten zweiten Eintrag mit dem ersten Hashwert umfasst.

Ausführungsformen können den Vorteil haben, dass sie eine sichere Ausstellung bzw. Beglaubigung von virtuellen Dokumenten, wie beispielsweise Zeugnissen oder anderen Dateien, ermöglichen. Unter Ausstellen eines virtuellen Dokuments wird hier das Erstellen einer elektronischen Datei mit allen Daten des entsprechenden Dokuments sowie eines Nachweises für die Authentizität der entsprechenden Daten verstanden. Nach Ausführungsformen umfasst ein solcher Authentizitätsnachweis für ein virtuelles Dokument einen in eine Blockchain eingetragenen Hashwert des entsprechenden virtuellen Dokuments. Die Sicherung eines virtuellen Dokuments durch eine Prüfsumme basierend auf einem Hash und die Speicherung einer Blockchain ist effektiv und sicher. Somit können insbesondere Fälschungen effizient verhindert werden. Die entstehenden Kosten wachsen kaum mit der Anzahl der Dokumente, da die Kosten für die Sicherung der einzelnen Dokumente bereits niedrig sind. Darüber können Ausführungsformen den Vorteil haben, dass durch die Blockchain die Authentizität aller Kopien eines einmal in die Blockchain eingetragenen Dokuments bestätigt werden. Es ist somit möglich eine unbegrenzte Anzahl von Kopien mit einer einzigen Eintragung in die Blockchain zu beglaubigen. Solange die Kopien inhaltlich identisch mit dem Originaldokument bzw. der Originaldatei sind, sodass sich der Hashwert nicht ändert, kann anhand der Blockchain verifiziert werden, dass es sich bei einer entsprechenden Kopie tatsächlich um eine originalgetreue Kopie handelt. Im Falle von herkömmlichen Dokumenten in Papierform, müsste beispielsweise jede einzelne Kopie beglaubigt werden. Das Verfahren ist für alle Typen von virtuellen Dokumenten, d. h. Datenobjekten bzw. Dateien, geeignet. Es lassen sich Dokument beliebiger Größe bzw. Seitenzahl effizient und speicherplatzsparend sichern. Das Verfahren ist einfach zu handhaben. Schließlich ermöglicht eine Verwendung einer Blockchain einer Kryptowährung die Implementierung eines impliziten Gebührensystems.

Der resultierende Hashwert des Dokuments ist permanent öffentlich zugänglich gespeichert. Nach Ausführungsformen wird der Hashwert zusammen mit einem Zeitstempel in die Blockchain eingetragen, so dass der Zeitpunkt der Ausstellung des Dokuments jederzeit verifizierbar ist. Ungeachtet der öffentlichen Zugänglichkeit des Hashwerts, umfasst die Blockchain keine öffentlich zugänglichen persönlichen Daten des Dokumenteninhabers oder sonstige von dem Dokument umfassten Daten. Die persönlichen Daten des Dokumenteninhabers ebenso wie das Dokument selbst befinden sich allein in der Verfügungsgewalt des Dokumentinhabers bzw. des Dokumentenausstellers. Nur wer sich im Besitz des Dokuments befindet kann dessen Hashwert berechnen und prüfen, ob ein identischer Hashwert in der Blockchain hinterlegt wurde. Ist dies der Fall, wird das vorliegende Dokument als authentisch angesehen. Aus den öffentlich zugänglichen Hashwerten der Blockchain lassen sich jedoch keine Informationen über Art oder Inhalt des zugrundliegenden Dokuments gewinnen.

Nach Ausführungsformen umfasst der Eintrag in der Blockchain mit dem Hashwert eine Signatur des Ausstellers des Dokuments. Beispielsweise ist die Transaktion, welche den Hashwert enthält, mit dem privaten kryptographischen Schlüssel des Ausstellers signiert. Diese Signatur lässt sich mit dem zugehörigen öffentlichen kryptographischen Schlüssel des Ausstellers prüfen. Da der öffentliche Schlüssel des Ausstellers bekannt gemacht wurde, ist nachprüfbar, dass das Dokument auch tatsächlich von einem dazu berechtigten Aussteller ausgestellt wurde. Beispielsweise kann im Falle eines Zeugnisses nachgeprüft werden, ob auch tatsächlich die zuständige Schule das Zeugnis ausgestellt, d. h. in die Blockchain eingestellt hat.

Beispielsweise beschreibt der Eintrag in der Blockchain eine Transaktion von einer Ausgangsadresse an eine Zieladresse, wobei es sich beispielsweise bei der Ausgangsadresse um eine Adresse des Austellers, wie etwa einer Schule, handelt. Diese Ausgangsadresse kann beispielsweise dem öffentlichen kryptographischen Schlüssel des Ausstellers entsprechen, sodass der Ursprung des Hashwerts in der Blockchain nachprüfbar ist. Von dieser Ausgangsadresse können nur Daten gesendet werden, die mit dem zugehörigen privaten kryptographischen Schlüssel des Ausstellers signiert sind. Beim Eintragen in die Blockchain identifiziert beispielsweise die Eintragungsanfrage die entsprechende Ausgangsadresse.

Nach Ausführungsformen wird eine Blockchain zum Ausstellen und Verifizieren von virtuellen Dokumenten, wie beispielsweise Zeugnissen bereitgestellt. Möchte ein Aussteller von Dokumenten, wie etwa eine Behörde, eine Universität, eine Schule, ein Institut, ein privates Unternehmen, die Blockchain nutzen, so kann er sich registrieren lassen. Im Zuge der Registrierung wird beispielsweise der Aussteller beispielsweise authentifiziert. Sobald der Aussteller registriert ist, d. h. sein öffentlicher kryptographischer Schlüssel in der Blockchain hinterlegt ist, kann er virtuelle Dokumente ausstellen und deren Hashwerte zum Zwecke der Verifikation in der Blockchain hinterlegen. Dieses Hinterlegen der Hashwerte in der Blockchain entspricht einer Beglaubigung der entsprechenden virtuellen Dokumente sowie aller originalgetreuen Kopien derselben.

Ausführungsformen können es somit ermöglichen, dass Dokumente, wie etwa Zeugnisse, ausschließlich oder zusätzlich zu ihrer Ausgestellung in Papierform in virtueller Form als Datenkonstrukt zur elektronischen Datenverarbeitung ausgestellt werden. Solche virtuellen Dokumente können auf beliebigen elektronischen Geräten mit entsprechenden Speichern aufbewahrt und/oder transportiert werden. Diese elektronischen Geräte sollten allerdings gegenüber unberechtigten Zugriffen geschützt sein. Beispielsweise können die Dokumente in einem geschützten Speicherbereich des entsprechenden Speichers aufbewahrt werden. Ferner können die Dokumente kryptographisch gesichert werden, beispielsweise unter Verwendung eines Sicherheitsmoduls. Zudem lassen sich die virtuellen Dokumente leicht über elektronische Kommunikationsverbindungen, wie etwa das Internet, versenden. Die für das Versenden genutzten Kommunikationsverbindungen sollten allerdings gegen Abhören oder Manipulationsversuche unberechtigter Dritter geschützt sein. Eine kryptographische Absicherung kann beispielsweise durch eine Verschlüsselung mit einem symmetrischen kryptographischen Schlüssel und/oder einem dem Empfänger zugeordneten öffentlichen kryptographischen Schlüssel erfolgen. Nach Ausführungsformen erfolgt eine Übertragung über eine mittels Ende-zu-Ende-Verschlüsselung gesicherte Verbindung. Ferner kann die Übertragung des virtuellen Dokuments kann dabei mittels einer geeigneten Transportverschlüsselung gesichert werden, wie beispielsweise HTTPS.

Falls der Inhaber eines solchen virtuellen Dokuments eine Kopie zum Versenden benötigt, beispielsweise im Fall von Zeugnissen Kopien für eine Online-Bewerbung, kann er sich diese selbst erstellen. Solange die Kopie gegenüber dem original unverändert ist, d.h. den selben Hashwert aufweist, ist die resultierende Kopie durch den in der Blockchain eingetragenen Hashwert bereits beglaubigt. Der Empfänger der entsprechenden Kopie kann deren Hashwert berechnen und anhand der Blockchain prüfen, ob ein identischer Hashwert von einer dazu berechtigten Instanz, d. h. dem Aussteller, hinterlegt ist. Beispielsweise kann ein Bewerber bei einer Online-Bewerbung all seine Zeugnisse in virtueller Form übersenden und der Empfänger kann diese durch ein Computersystem automatisch auf ihre Authentizität hin überprüfen lassen. Eine solche Automatisierung kann insbesondere für große internationale Unternehmen mit tausenden von Bewerbungen pro Monat von Vorteil sein. Ausführungsformen implementieren ausreichend hohe Sicherheitsstandards, sodass Fälschungen ausgeschlossen werden können. Dies kann beispielsweise Krankenhäusern von Vorteil sein, da somit effizient und effektiv geprüft werden kann, ob ein Bewerber gefälschte Zeugnisse, insbesondere eine gefälschte Approbationsurkunde vorlegt. Die Überprüfung kann durch Verwendung einer zentralen Blockchain beispielsweise in effizienter Form für alle nationalen und/oder zumindest eine Auswahl internationaler Universitäten, welche anerkannte Medizinstudiengänge anbieten, implementiert werden. Da die Blockchain nur Hashwerte, keine persönlichen Daten des Zeugnisinhabers umfasst, wird zudem ein hoher Datenschutzstandard sichergestellt.

Nach Ausführungsformen ist ein Eintrag beispielsweise dem Programmmodul zugeordnet, wenn er eine ID des Programmmoduls umfasst.

Unter einem "Dokument" wird insbesondere eine Urkunde, ein Zeugnis, oder ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder ein Firmenausweis, oder ein anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem Dokument um ein Machine-Readable Travel Document, wie beispielsweise von der Internationalen Luftfahrtbehörde (ICAO) und/oder dem BSI standardisiert, handeln.

Unter einem "virtuellen" Dokument wird ein Datenkonstrukt zur elektronischen Datenverarbeitung verstanden, welches dieselben Daten wie ein zuvor definiertes Dokument, jedoch keinen fest zugeordneten physischen Dokumentenkörper umfasst. Ein virtuelles Dokument, auch als elektronisches Dokument bezeichnet, kann somit beispielsweise einen Text, eine Zahlentabelle, ein Bild oder eine Folge oder Kombination von Texten, Tabellen oder Bildern umfassen, welche durch Digitalisieren, d. h. eine Umwandlung in einen Binärcode, in Dateiform angelegt oder überführt wurden. Insbesondere ist die Gültigkeit eines solchen Dokuments unabhängig von dem Vorhandensein eines fest zugeordneten Dokumentenkörpers. Bei einem "virtuellen" Dokument kann es sich um eine elektronische Datei eines beliebigen Dateiformats handeln, insbesondere eine nicht ausführbare Text- oder Tabellendatei. Ferner kann es sich bei einem virtuellen Dokument beispielsweise auch um eine Videodatei, eine Lieddatei, ein Programmcode, eine ausführbare Datei, ein Archiv oder Ähnliches handeln.

Nach Ausführungsformen wird kann ein virtuelles Dokument beispielsweise erstellt werden, indem eine Datei mit den Daten des entsprechenden Dokuments an einem Computer erzeugt wird. Ferner kann ein virtuelles Dokument beispielsweise auch durch Einscannen oder Ablichten eines physischen Dokuments, wie etwa einem Dokument auf Papier, erstellt werden. Wird ein virtuelles Dokument unter Verwendung eines solchen Scans ausgestellt, besitzt im Ergebnis allerdings nur das virtuelle Dokument in Form der konkreten Scandatei sowie aller identischen Duplikate bzw. Kopien der konkreten Scandatei Gültigkeit. Ein erneuter Scan desselben physischen Ursprungsdokuments wird im Allgemeinen in einer weiteren Scandatei resultieren, welche einen anderen Hashwert aufgrund geringer Variationen des Scanvorgangs aufweist. Somit kann sich aus einem in der Blockchain bereits eingetragenen Hashwert einer zuvor erstellten Scandatei desselben Ursprungsdokuments kein Authentizitäts- bzw. Gültigkeitsnachweis für diese weitere Scandatei ergeben. Aufgrund der Verwendung von Hashwerten ist der Authentizitätsnachweis bzw. die Gültigkeit eines virtuellen Dokuments gemäß dem hier beschriebene Verfahren jedoch an eine unveränderte Datei gebunden.

Eine Urkunde ist eine Erklärung in Text- oder Schriftform, welche einen bestimmten Tatbestand bzw. Sachverhalt fixiert. Zudem kann die Urkunde den Austeller der Urkunde identifizieren. Bei einem Zeugnis kann es sich beispielsweise um Schul- oder Universitätszeugnisse, Bescheinigungen über eine erfolgreiche Teilnahme an Fortbildungen bzw. Kursen, Vorlesungsscheine, Praktikumsbescheinigungen oder Arbeitszeugnisse handeln.

Bei einem Zeugnis kann es sich beispielsweise um ein IHK-Prüfungszeugnis handeln, das eine Urkunde ist, die einem erfolgreichen Absolventen nach bestandener Abschlussprüfung vor der Industrie- und Handelskammer (IHK) in einem anerkannten Ausbildungsberuf oder einer Aufstiegsfortbildung ausgehändigt wird. Ein IHK-Zeugnis umfasst beispielsweise Angaben über den erlernten Beruf, d. h. eine Berufsbezeichnung, und die bestandene Abschlussprüfung. Das Zeugnis kann in einem einheitlichen Layout erscheinen und die Berufsbezeichnung sowie Fachrichtung oder Schwerpunkt enthalten. Das Gesamtergebnis mit Note und Punktzahl steht oberhalb der einzelnen Prüfungsergebnisse. Auf Antrag des Prüfungsteilnehmers kann eine Berufsschulnote unterhalb der einzelnen Prüfungsergebnisse ausgewiesen sein.

Darüber hinaus kann es sich bei einem Dokument beispielsweise auch um einen Facharbeiterbrief, Gesellenbrief, Meisterbrief, eine Bachelor-Urkunde, Master-Urkunde, Magisterurkunde, Diplomurkunde, Promotionsurkunde oder Approbationsurkunde handeln.

Unter einer "Blockchain" wird hier und im Folgenden eine geordnete Datenstruktur verstanden, welche eine Mehrzahl von miteinander verketteten Datenblöcken umfasst. Insbesondere wird unter einer Blockchain eine geordnete Datenstruktur verstanden, bei welcher jeder der Blöcke (außer dem ersten Block) einen Prüfwert, beispielsweise einen Hash-Wert, seines Vorgängerblocks umfasst und somit anhand jedes Blocks die Gültigkeit aller seiner Vorgängerblocks geprüft und ggf. bestätigt werden kann. Für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchain wurde beispielsweise im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Die darin beschriebene Blockchain besteht aus einer Reihe von Datenblöcken, in denen jeweils ein oder mehrere Einträge bzw. Transaktionen zusammengefasst und mit einer Prüfsumme in Form eines Hashwerts versehen sind. Zusätzliche Blöcke der Blockchain werden beispielsweise in einem rechenintensiven Prozess erzeugt, der auch als sogenanntes Mining bezeichnet wird. Diese zusätzlich erzeugten Blöcke werden anschließend der Blockchain hinzugefügt und über ein Netzwerk an alle Teilnehmer, bzw. Knoten des Netzwerks, verbreitet.

Ausführungsformen können den Vorteil haben, dass die Blockchain durch die Speicherung kryptografischer Prüfsumme, d. h. Hashwerten, des vorangehenden Blocks im jeweils nachfolgenden Block ein hohes Maß an Sicherheit gegenüber nachträglichen Manipulationen bietet. Bei einer Blockchain werden die Einträge bzw. Transaktionen eines Blocks beispielsweise durch einen Merkle-Baum paarweise miteinander gehasht und nur der letzte auf diese Weise erhaltene Hashwert des Blocks, der sogenannte Root-Hashwert bzw. Wurzelhashwert, als Prüfsumme beispielsweise in einem Header des Blocks vermerkt. Das Verketten der Blöcke kann dann unter Verwendung dieser Root-Hashwerte überprüft werden. Jeder Block der Blockchain enthält in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner Transaktionen praktisch ausgeschlossen ist, da hierfür die Hashwerte aller nachfolgenden Blöcke in kurzer Zeit ebenfalls neu berechnet werden müssten.

Der erste Block in der Blockchain ist vorgegeben und wird Genesisblock genannt. Nach Ausführungsformen sind die öffentlichen kryptographischen Schlüssel eines oder mehrerer Provider, welche zum Erstellen von Programmmodulen berechtigt sind, in dem Genesisblock gespeichert. Der Genesisblock ist aufgrund der zuvor beschriebenen Kettenstruktur derjenige Block, dessen Einträge das höchste Maß an Sicherheit aufweisen, da zu seiner Änderung die gesamte Blockchain durch eine neue Blockchain ersetzt werden müsste. Mithin kann der Eintrag des öffentlichen kryptographischen Schlüssels in den Genesisblock einen Vertrauensanker mit einem ausreichenden Maß an Sicherheit darstellen, sodass beispielsweise keine zusätzliche PKI-Prüfung notwendig ist, um der Authentizität des öffentlichen kryptographischen Schlüssels zu vertrauen. Dadurch kann die Sicherheit des Systems im Offline-Modus weiter erhöht werden.

Zudem kann durch eine Anpassung der notwendigen Rechenintensität für die Erstellung jeweils zusätzlicher Blöcke die Sicherheit zusätzlich erhöht werden. Die für die Erstellung zusätzlicher Blöcke notwendige Rechenintensität lässt sich über Anforderungen an den Hashwert des zu erstellenden zusätzlichen Blocks steuern. Der resultierende Hash-Wert ist nicht vorhersagbar, vielmehr handelt es sich um eine zufallsverteilte Zahl. Es lässt sich aber berechnen, wieviel Zeit in Abhängigkeit von der aufgewendeten Rechenleistung im statistischen Mittel zum Auffinden eines gültigen zusätzlichen Blocks notwendig ist. Der Hashwert eines Blocks lässt sich beispielsweise durch Hinzufügen und Variieren eines Nonce variieren. Aufgrund der Kettenstruktur können Daten, die einmal in einer Blockchain gespeichert sind, nicht mehr geändert oder entfernt werden, ohne große Teile der Blockchain zu ersetzen. Eine solche Ersetzung scheidet jedoch als Folge einer ausreichend rechenintensiven Generierung zusätzlicher Blöcke aus. Bekannte Ausführungsformen einer Blockchain, wie etwa im Fall der Kryptowährung Bitcoin, basieren auf einer Anonymität der an den Transaktionen beteiligten Partner. Demgegenüber kann durch oben beschriebene Signatur der in die Transaktionen eingetragenen Hashwerte, deren Authentizität belegt und ihr Ursprung nachgewiesen werden. Hierdurch kann die Fälschungssicherheit verbessert werden.

Eine Anforderung an einen gültigen Block kann beispielsweise darin bestehen, dass der Hashwert des Headers des Blocks kleiner gleich einem Grenzwert ist. Die Hashwertberechnung kann beispielsweise mit dem Secure Hash Algorithm (SHA) SHA 256 erfolgen. Der resultierende Hash-Wert ist in diesem Fall eine Zufallszahl zwischen 0 und 2²⁵⁶-1. Die Wahrscheinlichkeit, dass beim Anwenden des Hashalgorithmus ein bestimmter Hash herauskommt, ist somit (maximaler Hash-Wert+1)⁻¹, im Falle des SHA 256-Algorithums also 2⁻²⁵⁶. Die Wahrscheinlichkeit, dass der resultierende Hash-Wert kleiner gleich einem Grenzwert bzw. Zielwert (engl. "target") ist, beträgt daher (target)/(max. Hash-Wert). Für einen beispielhaften maximalen Grenzwert von (2¹⁶-1)·2²⁰⁸ beträgt die Wahrscheinlichkeit [(2¹⁶-1)·2²⁰⁸]/ 2²⁵⁶ ≈ 2⁻³². Die Schwierigkeit S eine Hash-Wert zu erhalten, welcher kleiner gleich einem gewählten Grenzwert bzw. target ist, kann in Abhängigkeit eines maximalen Grenzwerts bzw. max. target wie folgt angegeben werden: S = (max. target)/target. Mithin ist die Wahrscheinlichkeit einen Hash-Wert zu erhalten, welcher kleiner gleich dem gewählten Grenzwert ist, für das zuvor gegebene Beispiel: 2⁻³²/S. Als Beispiel sei ein Computersystem mit einer bestimmten Hashrate betrachtet, welches im Durchschnitt alle x·Sek. einen Hash-Wert findet, welcher kleiner gleich dem gewählten Grenzwert ist. Soll das Computersystem anstelle aller x·Sek. im Durchschnitt alle y·Sek. einen Treffer erzielen, so kann die Schwierigkeit entsprechend angepasst werden: S_{y}=(x/y)·S. Entsprechende Anpassungen der Schwierigkeit können auch dazu verwendet werden die Trefferrate bei Veränderungen des Computersystems, z. B. Veränderungen der Rechenleistung durch Erhöhen oder Verringern der Anzahl an Blockchain-Servern, konstant zu halten. Wird die Schwierigkeit so angepasst, dass alle y·Sek. ein Treffer erzielt wird, kann die Hashrate R des Computersystems wie folgt parametrisiert werden: R = (2³²·S)/(y·Sek.).

Werden gültige Blöcke durch ein rechenintensives Verfahren, wie das zuvor Beschriebene erzeugt, so vertrauen die Teilnehmer des Blockchain-Netzwerks der längsten gültigen Blockchain, da hinter dieser die meiste Rechenleistung steht und somit angenommen werden kann, dass diese von der Mehrheit der Teilnehmer als gültig anerkannt wird. Kommt es beispielsweise dazu, dass ein Fork, d. h. eine Verzweigung, in der Blockchain entsteht, setzt sich irgendwann der Fork mit der größeren Kettenlänge durch, da anzunehmen ist, dass hinter diesem die Mehrheit der Teilnehmer steht.

Eine Blockchain kann beispielsweise auch in Form einer privaten Blockchain implementiert werden, wobei nur eine ausgewählte Gruppe von Teilnehmern eine Berechtigung zum Hinzufügen gültiger Blöcke besitzt. Eine entsprechende Berechtigung kann beispielsweise mittels einer Signatur unter Verwendung eines privaten kryptographischen Schlüssels nachgewiesen werden. Der private kryptographische Schlüssel kann zu einem asymmetrischen Schlüsselpaar gehören, zu welchem auch ein öffentlicher kryptographischer Schlüssel gehört, mit dem die Signatur geprüft werden kann. Dem asymmetrischen Schlüsselpaar kann zudem beispielsweise ein Zertifikat zugeordnet sein, welches die Berechtigung zum Erzeugen eines gültigen Blocks der Blockchain belegt. Dieses Zertifikat kann ferner einer PKI zugeordnet sein, welche die Authentizität des Zertifikats belegt. Nach einer weiteren Ausführungsform kann beispielsweise für jeden Teilnehmer aus der ausgewählte Gruppe ein öffentlicher Schlüssel in der Blockchain hinterlegt sein, beispielsweise in einem Genesisblock. Anhand dieser öffentlichen Schlüssel kann geprüft werden, ob Signaturen von Blöcken und damit die entsprechenden Blöcke selbst gültig sind.

Ein Konsens kann auch auf andere Weise in einer Blockchain implementiert werden. So kann etwa ein Konsens erreicht werden, indem über eine Aufnahme vorgeschlagener Einträge in die Blockchain abgestimmt wird. Beispielsweise führt jeder Teilnehmer eine eindeutige Liste anderer Teilnehmer, welchen er als Gruppe vertraut. Jeder Teilnehmer kann zusätzliche Einträge vorschlagen, die in einen zusätzlichen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmer seiner Liste stammen. Mit anderen Worten werden für die Entscheidung, ob ein Vorschlag für einen zusätzlichen Eintrag als gültig anerkannt wird, d. h. ob bezüglich der Gültigkeit dieses Eintrages ein Konsens zwischen den Teilnehmern besteht, nur die Stimmen derjenigen Teilnehmer berücksichtig, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%. Alle vorgeschlagenen Einträge, die dieses Kriterium erfüllen, werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc., 2014, https://ripple.com/files/ripple_consensus_whitepaper.pdf).

Zur Überprüfung der Einträge der Blockchain bzw. zum Suchen von Hashwerten kann ein GUI, beispielsweise in Form einer Internetseite durch eine Verwaltungsinstanz der Blockchain bereitgestellt werden. Beispielsweise kann es sich bei der Blockchain um eine private, z. B. unternehmensinterne oder verbundinterne, oder öffentliche Blockchain handeln. Beispielsweise handelt es sich um eine Bitcoin-, Litecoin- oder Ethereum-Blockchain.

Ein "Programmmodul" bezeichnet hier ein eigenständiges Programm, welches in einer Blockchain gespeichert ist. Das Programmmodul kann dazu konfiguriert sein das Erstellen von dem Programmmodul zugeordneten Einträgen in der Blockchain zu steuern. Das Programmmodul kann in einem Block der Blockchain oder über mehrere Blöcke der Blockchain verteilt gespeichert sein. Jedem Aussteller oder jeder Verwaltungsinstanz einer Gruppe von Ausstellern oder allen Ausstellern zusammen ist beispielsweise ein individuelles Programmmodul zugeordnet. Bei der Blockchain handelt es sich beispielsweise um eine spezielle Dokumenten- bzw. Zeugnisblockchain. Bei einem Programmmodul kann es sich beispielsweise um einen "smart contract" handeln, wie er beispielsweise in der Open Source Ethereum Blockchain implementierbar ist.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einer "Schnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein virtuelles privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Unter einem "Speicher" werden hier sowohl flüchtige als auch nichtflüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln.

Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehen. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des Sicherheitsmoduls möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "Zertifikat" wird hier ein digitales Zertifikat verstanden, welches auch als Public-Key-Zertifikat bezeichnet wird. Im Folgenden werden "digitale" Objekte auch als "virtuelle" Objekte bezeichnet, d. h. Datenkonstrukte zur elektronischen Datenverarbeitung. Durch solche Zertifikate basierend auf asymmetrischen Schlüsselpaaren wird eine so genannte Public-Key-Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf Zero-Knowledge-Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptographische Verfahren ein bewährtes Mittel, um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt, um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter, weitergegeben werden darf, sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem privaten Schlüssel eines einem Zertifikat zugeordneten kryptographischen Schlüsselpaares verschlüsselter Hashwert. Die Besonderheit einer solchen Signatur besteht darin, dass deren Urheberschaft und Zugehörigkeit zu einer bestimmten Person oder Instanz durch jeden Dritten geprüft werden kann.

Unter einer digitalen Signatur wird hier auch ein digitales Siegel verstanden, welches nicht einer natürlichen Person, sondern einer juristischen Person zugeordnet ist. Ein digitales Siegel dient somit nicht der Abgabe einer Willenserklärung einer einzelnen Person, sondern einer Institution als Herkunftsnachweis. Es kann somit den Ursprung und die Unversehrtheit virtueller Dokumente sicherstellen und nachweisen, dass diese von einer bestimmten juristischen Person stammen.

Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht dient.

Ein Schlüssel zum Authentifizieren eines Senders einer Nachricht im Zuge eines Secure-Messaging-Verfahrens kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt, und dass die Nachricht während der Übertragung nicht verändert wurde.

Nach Ausführungsformen umfasst die Registrierungsanfrage ein Registrierungspasswort. Das Prüfen der Gültigkeit der Registrierungsanfrage umfasst ein Prüfen der Gültigkeit des Registrierungspassworts.

Ausführungsformen können den Vorteil haben, dass dem Aussteller, beispielsweise von einer Verwaltungsinstanz der Blockchain bzw. des Programmmoduls oder des Ausstellers, ein Registrierungspasswort zur Registrierung in der Blockchain bereitgestellt wird. Mit diesem durch eine Registrierung in der Blockchain kann der Aussteller für sich die Berechtigung zum Hinterlegen von Hashwerten unter Verwendung des Programmmoduls freischalten. Beispielsweise handelt es sich bei dem Aussteller um eine Schule, welche sich Registrieren möchte, um Hashwerte von Zeugnisse hinterlegen zu können. Hierzu fragt die Schule bei der Verwaltungsinstanz ein Registrierungspasswort zum Registrieren an. Dies kann beispielsweise schriftlich per Post, per Email oder über eine Internetseite erfolgen. Eine Anfrage auf elektronischem Weg kann kryptographisch gesichert sein. Eine kryptographische Sicherung kann beispielsweise durch eine Verschlüsselung mit einem symmetrischen kryptographischen Schlüssel und/oder einem dem Empfänger zugeordneten öffentlichen kryptographischen Schlüssel erfolgen. Nach Ausführungsformen erfolgt eine Übertragung über einen mittels Ende-zu-Ende-Verschlüsselung gesicherte Verbindung. Ferner kann die Übertragung der Anfrage mittels einer geeigneten Transportverschlüsselung gesichert werden, wie beispielsweise HTTPS. Beispielsweise anhand der Anfrage wird die Schule authentifiziert. Bei einer Anfrage auf elektronischem Weg kann diese beispielsweise mit einem Siegel, d. h. einem der Schule zugeordneten privaten kryptographischen Signaturschlüssel, signiert sein. Auf die Anfrage hin sendet die Verwaltungsinstanz der Schule das Registrierungspasswort zu. Beispielsweise erfolgt das Zusenden per Post. Dies kann als zusätzliche Sicherheitsmaßnahme dienen, da die Postanschrift der Schule öffentlich bekannt ist und sich im Allgemeinen nur bei einem Umzug der Schule ändert. Somit kann mit hoher Sicherheit angenommen werden, dass der Empfänger des per Post versendeten Registrierungspassworts auch tatsächlich die Schule ist, selbst wenn die zugrundeliegende Anfrage beispielsweise von einem unberechtigten Dritten stammt, welcher die Identität der Schule vorgetäuscht hat. Alternativ kann das Registrierungspasswort auf elektronischem Wege über eine wie oben beschriebene kryptographisch gesicherte Kommunikationsverbindung gesendet werden.

Bei dem Registrierungspasswort kann es sich beispielsweise um eine "One-Time-Password" oder "OTP" handeln. Unter einem OTP wird hier ein Einmal-Passwort, welches nur für eine einmalige Verwendung gültig sein soll.

Nach Ausführungsformen umfasst das Verfahren ferner ein Senden des virtuellen Dokuments an ein zweites Computersystem in Antwort auf die Anfrage zum Ausstellen des virtuellen Dokuments. Ausführungsformen können den Vorteil haben, dass einem zweiten Computersystem, wie etwa einem Computersystems des Inhabers des Dokuments, das virtuelle Dokument zur Verfügung gestellt wird. Der Inhaber des virtuellen Dokuments erlangt so Verfügungshoheit über das Dokument und kann dies an ausgewählte weitere Computersysteme senden, welche die Authentizität des virtuellen Dokuments anhand der Blockchain prüfen können.

Nach Ausführungsformen umfasst die Registrierungsanfrage zudem eine Aussteller-ID. Die Aussteller-ID wird bei einer erfolgreichen Prüfung des Registrierungspassworts zusammen mit dem öffentlichen kryptographischen Schlüssel in den zweiten Block der Blockchain eingetragen. Ausführungsformen können den Vorteil haben, dass aus der Blockchain die Identität des Austellers bestimmt werden kann.

Eine ID ist ein Identifikator, auch als Kennung bezeichnet, welcher ein mit einer bestimmten Identität verknüpftes Merkmal zur eindeutigen Identifizierung einer Person oder eines Objekts umfasst, beispielsweise des Ausstellers der virtuellen Dokumente, dem der Identifikator zugeordnet ist. Ein Identifikator kann beispielsweise Zahlen, Buchstaben, Sonderzeichen sowie Kombinationen aus diesen umfassen. Beispielsweise kann die Aussteller-ID den Namen des Ausstellers umfassen.

Nach Ausführungsformen umfasst das Prüfen des Registrierungspassworts:
- Vergleichen des empfangenen Registrierungspassworts durch den ersten Blockchain-Server mit einem in der Blockchain gespeicherten Registrierungspassworts,
- im Falle einer Übereinstimmung des empfangenen Registrierungspassworts mit dem gespeicherten Registrierungspasswort, bestätigen der Gültigkeit des empfangenen Registrierungspassworts durch den ersten Blockchain-Server.

Ausführungsformen können den Vorteil haben, dass ein effizientes Verfahren zum Bestimmen der Gültigkeit eines von einem Aussteller zur Registrierung vorgelegten Registrierungspassworts bereitgestellt wird. Nach Ausführungsformen wir das in der Blockchain gespeicherte Registrierungspassworts durch ein Verwaltungscomputersystem einer Verwaltungsinstanz erzeugt und in der Blockchain abgespeichert.

Nach Ausführungsformen wird im Falle einer Übereinstimmung des empfangenen Registrierungspassworts mit dem gespeicherten Registrierungspasswort ein Vermerk in einem Eintrag der Blockchain gespeichert, welcher angibt, dass das entsprechende gespeicherte Registrierungspasswort verbraucht ist. Somit kann sichergestellt werden, dass keine weitere Registrierung unter Verwendung desselben Registrierungspassworts mehr möglich ist. Mithin kann so ein Einmalpasswort implementiert werden.

Nach Ausführungsformen wird das Registrierungspasswort in Form eines in der Blockchain signierten gespeicherten zweiten Hashwerts bereitgestellt. Das Vergleichen des empfangenen Registrierungspassworts mit dem gespeicherten Registrierungspasswort umfasst:
- Prüfen der Gültigkeit der Signatur des gespeicherten zweiten Hashwerts,
- Berechnen eines dritten Hashwerts des empfangenen Registrierungspassworts,
- Vergleichen des berechneten dritten Hashwerts mit dem gespeicherten zweiten Hashwert.

Ausführungsformen können den Vorteil haben, dass das Registrierungspasswort sich nicht aus dem zweiten Hashwert ableiten lässt. Somit kann das Registrierungspasswort geheim gehalten werden, selbst wenn die Einträge der Blockchain und insbesondere der zweite Hashwert öffentlich zugänglich sind. Ferner kann anhand der Signatur geprüft werden, ob das Registrierungspasswort von einer dazu berechtigten Instanz bereitgestellt wird.

Nach Ausführungsformen umfasst das Programmmodul dritte Programminstruktionen. Das Bereitstellen des Registrierungspassworts umfasst:
- Berechnen des zweiten Hashwerts des Registrierungspassworts durch ein erstes Verwaltungscomputersystem einer ersten Verwaltungsinstanz, welche das Programmmodul verwaltet,
- Signieren des zweiten Hashwerts mit einem privaten kryptographischen Schlüssel eines der ersten Verwaltungsinstanz zugeordneten asymmetrischen Schlüsselpaars,
- Erstellen einer Bereitstellungsanfrage durch das erste Verwaltungscomputersystem, wobei die Bereitstellungsanfrage den signierten zweiten Hashwert umfasst und das Programmmodul identifiziert,
- Senden der Bereitstellungsanfrage durch das erste Verwaltungscomputersystem an einen dritten Blockchain-Server, welcher dazu konfiguriert ist, Blöcke der Blockchain zu erzeugen,
- Empfangen der Bereitstellungsanfrage durch den dritten Blockchain-Server,
- Ausführen der dritten Programminstruktionen des durch die Bereitstellungsanfrage identifizierten Programmmoduls durch den dritten Blockchain-Server, wobei das Ausführen der dritten Programminstruktionen ein Prüfen der Signatur des zweiten Hashwerts durch den dritten Blockchain-Server unter Verwendung eines öffentlichen kryptographischen Schlüssels des der ersten Verwaltungsinstanz zugeordneten asymmetrischen Schlüsselpaars umfasst, und, im Falle einer gültigen Signatur, Erzeugen eines dritten zusätzlichen Blocks der Blockchain durch den dritten Blockchain-Server, wobei der erzeugte dritte Block einen dem Programmmodul zugeordneten dritten Eintrag mit dem signierten zweiten Hashwert umfasst.

Ausführungsformen können den Vorteil haben, dass ein effizientes und sicheres Verfahren zum Registrieren eines oder mehrerer Aussteller durch ein Bereitstellen eines oder mehrerer zweiter Hashwerte für ein oder mehrerer Registrierungspasswörter bereitgestellt wird.

Nach Ausführungsformen ist der öffentliche kryptographische Schlüssel der ersten Verwaltungsinstanz in der Blockchain gespeichert und der dritte Blockchain-Server verwendet zum Prüfen der Signatur des zweiten Hashwerts den in der Blockchain gespeicherten öffentlichen kryptographischen Schlüssel des ersten Verwaltungscomputersystems. Ausführungsformen können den Vorteil haben, dass der öffentliche kryptographische Schlüssel zum Prüfen der Gültigkeit der Signatur des zweiten Hashwerts durch die Blockchain bereitgestellt und somit eine effiziente Prüfung ermöglicht wird.

Nach Ausführungsformen ist eine ID der ersten Verwaltungsinstanz zusammen mit dem öffentlichen kryptographischen Schlüssel der ersten Verwaltungsinstanz in der Blockchain gespeichert. Ausführungsformen können den Vorteil haben, dass aus der Blockchain die Identität der Verwaltungsinstanz bestimmt werden kann.

Nach Ausführungsformen umfasst das Verfahren ferner ein Senden einer Passwortanfrage zum Erhalten des Registrierungspassworts durch das erste Computersystem an das erste Verwaltungscomputersystem. Die Passwortanfrage identifiziert den Aussteller. Ferner umfasst das Verfahren durch die erste Verwaltungsinstanz unter Verwendung des ersten Verwaltungscomputersystems:
- Empfangen der Passwortanfrage,
- Identifizieren einer dem Aussteller zugeordneten Postanschrift,
- Erstellen eines an die identifizierte Postanschrift adressierten Antwortschreibens, welches das Registrierungspasswort umfasst,
- Senden des Antwortschreibens per Post.

Ausführungsformen können den Vorteil haben, dass ein effizientes und sicheres Verfahren zum Bereitstellen des Registrierungspasswortes und somit zur Registrierung von Ausstellern implementiert wird. Nach Ausführungsformen umfasst das Verfahren ferner eine Gültigkeitsprüfung der Anfrage. Beispielsweise wird geprüft, ob die Anfrage von einer Institution, wie etwa einer Universität oder einer Schule, stammt, welche tatsächlich zum Ausstellen von entsprechenden Dokumenten, wie etwa Zeugnissen, berechtigt ist.

Nach Ausführungsformen umfasst das Verfahren durch die erste Verwaltungsinstanz unter Verwendung des ersten Verwaltungscomputersystems:
- Empfangen der Passwortanfrage,
- Erstellen einer Antwort auf die Passwortanfrage, welche das Registrierungspasswort umfasst,
- Senden der Antwort in kryptographisch gesicherter Form an das erste Computersystem des Ausstellers.

Ausführungsformen können den Vorteil haben, dass ein effizientes und sicheres Verfahren zum Bereitstellen des Registrierungspassworts und somit zur Registrierung von Ausstellern implementiert wird. Nach Ausführungsformen umfasst das Verfahren ferner eine Gültigkeitsprüfung der Anfrage. Beispielsweise wird geprüft, ob die Anfrage von einer Institution, wie etwa einer Universität oder einer Schule, stammt, welche tatsächlich zum Ausstellen von entsprechenden Dokumenten, wie etwa Zeugnissen, berechtigt ist.

Nach Ausführungsformen handelt es sich bei dem virtuellen Dokument um ein virtuelles Zeugnis.

Nach Ausführungsformen umfasst das Verfahren ferner:
- Erstellen des Programmmoduls durch das zweite Verwaltungscomputersystem,
- Erstellen einer signierten Initialisierungsanfrage durch das zweite Verwaltungscomputersystem mit dem Programmmodul,
- Senden der Initialisierungsanfrage durch das zweite Verwaltungscomputersystem an einen vierten Blockchain-Server, welcher dazu konfiguriert ist, Blöcke der Blockchain zu erzeugen,
- Empfangen des Programmmoduls durch den vierten Blockchain-Server,
- Prüfen der Signatur der Initialisierungsanfrage durch den vierten Blockchain-Server unter Verwendung des öffentlichen kryptographischen Schlüssels des der zweiten Verwaltungsinstanz zugeordneten asymmetrischen Schlüsselpaars, und, im Falle einer gültigen Signatur, Erzeugen eines vierten zusätzlichen Blocks der Blockchain durch den vierten Blockchain-Server, wobei der erzeugte vierte Block einen vierten Eintrag mit dem Programmmodul umfasst.

Ausführungsformen können den Vorteil haben, dass durch das Verwaltungscomputersystem das Programmmodul zur Eintragung von Hashwerten durch den oder die Aussteller virtueller Dokumente bereitgestellt werden kann. Dieses Programmodul ist beispielsweise zur Eintragung von Dokumenten eines Ausstellers oder einer gruppe von Ausstellern vorgesehen. Nach Ausführungsformen können durch das Verwaltungscomputersystem eine Mehrzahl von Programmmodul zur Eintragung von Hashwerten in die Blockchain eingetragen werden.

Nach Ausführungsformen umfasst das Programmmodul vierte Programminstruktionen und das Verfahren umfasst ferner:
- Empfangen einer ersten Zahlungsbestätigung einer Beglaubigungsgebühr für das Ausstellen des virtuellen Dokuments durch das zweite Verwaltungscomputersystem,
- Erstellen einer ersten Beglaubigungsbestätigung durch das zweite Verwaltungscomputersystem, wobei die Beglaubigungsbestätigung den signierten ersten Hashwert des virtuellen Dokuments umfasst und das Programmmodul identifiziert,
- Signieren der ersten Beglaubigungsbestätigung durch das zweite Verwaltungscomputersystem mit dem privaten kryptographischen Schlüssel der Verwaltungsinstanz,
- Senden der signierten ersten Beglaubigungsbestätigung an einen fünften Blockchain-Server, welcher dazu konfiguriert ist, Blöcke der Blockchain zu erzeugen,
- Empfangen der ersten Beglaubigungsbestätigung durch den fünften Blockchain-Server,
- Ausführen der vierten Programminstruktionen des durch die Beglaubigungsbestätigung identifizierten Programmmoduls durch den fünften Blockchain-Server, wobei das Ausführen der vierten Programminstruktionen ein Prüfen der Signatur der ersten Beglaubigungsbestätigung durch den fünften Blockchain-Server unter Verwendung des öffentlichen kryptographischen Schlüssels der zweiten Verwaltungsinstanz umfasst und, im Falle einer gültigen Signatur, Erzeugen eines fünften zusätzlichen Blocks der Blockchain durch den fünften Blockchain-Server, wobei der erzeugte fünfte Block einen dem Programmmodul zugeordneten fünften Eintrag mit der signierten ersten Beglaubigungsbestätigung umfasst.

Ausführungsformen können den Vorteil haben, dass ein virtuelles Dokument erst dann als beglaubigt gilt und somit tatsächlich verwendet werden kann, wenn eine Bestätigung über die Bezahlung einer Beglaubigungsgebühr vorliegt. Somit bieten Ausführungsformen ein Verfahren, um effizient sicher zu stellen, dass ein virtuelles Dokument erst dann verwendbar ist, wenn die entsprechenden Gebühren entrichtet wurden.

Nach Ausführungsformen zahlt der Nutzer, d. h. der Dokumenteninhaber, die Beglaubigungsgebühren und finanziert damit den zusätzlichen Aufwand für Aussteller und Verwaltungsinstanz, welcher sich aus dem Einbringen des Hashwerts in die Blockchain und die Bereitstellung bzw. Verwaltung der Blockchain ergibt.

Nach Ausführungsformen umfasst das Programmmodul fünfte Programminstruktionen und das Verfahren umfasst ferner:
- Erzeugen einer Transaktionsanweisung durch das zweite Verwaltungscomputersystem zur Transaktion zumindest eines Teilbetrags der Beglaubigungsgebühr in Form einer in der Blockchain implementierten Kryptowährung von einer der zweiten Verwaltungsinstanz zugeordneten Ausgangsadresse auf eine dem Aussteller zugeordnete Zieladresse,
- Signieren der Transaktionsanweisung mit einem privaten kryptographischen Schlüssel eines der Ausgangsadresse zugeordneten asymmetrischen Schlüsselpaars,
- Senden der Transaktionsanweisung an einen sechsten Blockchain-Server, welcher dazu konfiguriert ist, Blöcke der Blockchain zu erzeugen,
- Empfangen der Transaktionsanweisung durch den sechsten Blockchain-Server,
- Ausführen der fünften Programminstruktionen des durch die Bereitstellungsanfrage identifizierten Programmmoduls durch den sechsten Blockchain-Server, wobei das Ausführen der fünften Programminstruktionen ein Prüfen der Signatur der Transaktionsanweisung durch den sechsten Blockchain-Server unter Verwendung der Ausgangsadresse umfasst und, im Falle einer gültigen Signatur, ein Erzeugen eines sechsten zusätzlichen Blocks der Blockchain durch den sechsten Blockchain-Server, wobei der erzeugte sechste Block einen dem Programmmodul zugeordneten sechsten Eintrag mit der Transaktionsanweisung umfasst.

Ausführungsformen können den Vorteil haben, dass die Blockchain ein Zahlensystem unter Verwendung einer Kryptowährung wie beispielsweise Bitcoin oder Ethereum bereitstellt. Über dieses Zahlungssystem kann in effizienter und sicherer Weise ein Verfahren zum Aufteilen der Beglaubigungsgebühr zwischen Verwaltungsinstanz und Aussteller bereitgestellt werden.

Nach Ausführungsformen umfasst das Programmmodul sechste Programminstruktionen und das Verfahren umfasst ferner:
- Empfangen einer zweiten Zahlungsbestätigung der Beglaubigungsgebühr für das Ausstellen des virtuellen Dokuments durch das erste Computersystem,
- Erstellen einer zweiten Beglaubigungsbestätigung durch das erste Computersystem, wobei die Beglaubigungsbestätigung den signierten ersten Hashwert des virtuellen Dokuments umfasst und das Programmmodul identifiziert,
- Signieren der zweiten Beglaubigungsbestätigung durch das erste Computersystem mit dem privaten kryptographischen Schlüssel des Ausstellers,
- Senden der signierten zweiten Beglaubigungsbestätigung an einen siebten Blockchain-Server, welcher dazu konfiguriert ist, Blöcke der Blockchain zu erzeugen,
- Empfangen der zweiten Beglaubigungsbestätigung durch den siebten Blockchain-Server,
- Ausführen der sechsten Programminstruktionen des durch die zweite Beglaubigungsbestätigung identifizierten Programmmoduls durch den siebten Blockchain-Server, wobei das Ausführen der sechsten Programminstruktionen ein Prüfen der Signatur der zweiten Beglaubigungsbestätigung durch den siebten Blockchain-Server unter Verwendung des öffentlichen kryptographischen Schlüssels des Ausstellers umfasst und, im Falle einer gültigen Signatur, ein Erzeugen eines siebten zusätzlichen Blocks der Blockchain durch den siebten Blockchain-Server, wobei der erzeugte siebte Block einen dem Programmmodul zugeordneten siebten Eintrag mit der signierten zweiten Beglaubigungsbestätigung umfasst.

Ausführungsformen können den Vorteil haben, dass ein virtuelles Dokument erst dann als beglaubigt gilt und somit tatsächlich verwendet werden kann, wenn eine Bestätigung über die Bezahlung einer Beglaubigungsgebühr vorliegt. Somit bieten Ausführungsformen ein Verfahren, um effizient sicher zu stellen, dass ein virtuelles Dokument erst dann verwendbar ist, wenn die entsprechenden Gebühren entrichtet wurden.

Nach Ausführungsformen umfasst das Verfahren ferner:
- Empfangen des virtuellen Dokuments durch ein drittes Computersystem,
- Berechnen des ersten Hashwerts des virtuellen Dokuments durch das dritte Computersystem,
- Abfrage der Blockchain nach einem Eintrag mit dem ersten Hashwert des virtuellen Dokuments durch das dritte Computersystem,
- im Falle der Existenz des ersten Eintrags mit dem ersten Hashwert des virtuellen Dokuments, ohne das ein Eintrag mit einer Beglaubigungsbestätigung existiert, Bestätigen der Existenz des virtuellen Dokuments.

Ausführungsformen können den Vorteil haben, dass das virtuelle Dokument einem von dem zweiten Computersystem einem dritten Computersystem vorgelegt und von diesem effizient geprüft werden kann, ob das entsprechende virtuelle Dokument in der Blockchain offiziell existiert.

Nach Ausführungsformen umfasst die Bestätigung der Existenz des virtuellen Dokuments einen Hinweis auf eine mögliche Beglaubigung durch Zahlung der Beglaubigungsgebühr. Ausführungsformen können den Vorteil haben, dass so ein effizientes Verfahren zum Zahlen einer Beglaubigungsgebühr bereitgestellt wird. Die entsprechende Gebühr kann bei Bedarf entweder vom Dokumenteninhaber oder einem Empfänger des virtuellen Dokuments entrichtet werden, welcher eine Beglaubigung benötigt.

Nach Ausführungsformen umfasst das Verfahren, im Falle der Existenz des Eintrags mit dem ersten Hashwert des virtuellen Dokuments sowie eines Eintrags mit einer Beglaubigungsbestätigung für den ersten Hashwert, ferner ein Bestätigen der Beglaubigung des virtuellen Dokuments. Ausführungsformen können den Vorteil haben, dass ein Verfahren zu einer effizienten Beglaubigung virtueller Dokumente bereitgestellt wird. Dies kann eine Echtheitsprüfung digitaler bzw. virtueller Dokumente durch jeden ermöglichen, dem das entsprechende virtuelle Dokument vorliegt. Stimmt der Hashwert des virtuellen Dokuments mit einem in der Blockchain hinterlegten, beglaubigten Hashwert überein, so folgt daraus, dass es sich bei dem virtuellen Dokument um ein authentisches Dokument handelt.

Ausführungsformen umfassen ferner ein System, welches ein erstes einem Aussteller zugeordnetes Computersystem umfasst, das zum Ausführen eines Verfahren nach einer der zuvor beschriebenen Ausführungsformen konfiguriert ist.

Nach Ausführungsformen umfasst das System ferner ein erstes Verwaltungscomputersystem, das einer ersten Verwaltungsinstanz zugeordnet und zum Ausführen eines Verfahren nach einer der zuvor beschriebenen Ausführungsformen konfiguriert ist.

Nach Ausführungsformen umfasst das System ferner ein zweites Verwaltungscomputersystem, das einer zweiten Verwaltungsinstanz zugeordnet und zum Ausführen eines Verfahrens nach einer der zuvor beschriebenen Ausführungsformen konfiguriert ist.

Nach Ausführungsformen umfasst das System ferner ein drittes Computersystem, das zum Ausführen eines Verfahren nach einer der zuvor beschriebenen Ausführungsformen konfiguriert ist.

Nach Ausführungsformen umfasst das System ferner zumindest einen Blockchain-Server, welcher zum Ausführen eines Verfahrens nach einer der zuvor beschriebenen Ausführungsformen konfiguriert ist.

Die Verwendung von Ordinalzahlen wie erstes, zweites, drittes etc. dient hier, soweit sich aus dem konkreten Zusammenhang nicht eindeutig etwas anderes ergibt, allein der Unterscheidung voneinander verschiedener Elemente und soll keine bestimmte Reihenfolge implizieren.

Bei den zuvor genannten Blockchain-Servern, d. h. den ersten bis siebten Blockchain-Servern, kann es sich nach Ausführungsformen bei allen oder einem Teil davon um ein und denselben oder verschiedene Blockchain-Server handeln.

Bei den zuvor genannten ersten und zweiten Verwaltungscomputersystemen der ersten bzw. zweiten Verwaltungsinstanz kann es sich nach Ausführungsformen um verschiedene oder ein und dasselbe Verwaltungscomputersystemen verschiedener bzw. ein und derselben Verwaltungsinstanz handeln. Beispielsweise handelt es sich bei der ersten Verwaltungsinstanz um eine Verwaltungsinstanz des Ausstellers, welche den und/oder eine Gruppe von Ausstellern verwaltet. Beispielsweise handelt es sich bei der ersten und/oder zweiten Verwaltungsinstanz um eine Verwaltungsinstanz des Programmmoduls und/oder der Blockchain, welche das Programmmodul und/oder die Blockchain verwaltet.

Im Weiteren werden Ausführungsformen der Erfindung mit Bezugnahme auf die Zeichnungen näher erläutert. Es zeigen:
- Figur 1: schematische Blockdiagramme einer ersten Ausführungsform eines exemplarischen Systems zum Ausstellen eines virtuellen Dokuments,
- Figur 2: ein schematisches Blockdiagramm einer zweiten Ausführungsform eines exemplarischen Systems zum Ausstellen eines virtuellen Dokuments,
- Figur 3: ein schematisches UML-Diagramm einer Ausführungsform eines exemplarischen Verfahrens zum Ausstellen eines virtuellen Dokuments,
- Figur 4: ein schematisches Flussdiagramm einer Ausführungsform eines exemplarischen Verfahrens zum Ausstellen eines virtuellen Dokuments,
- Figur 5: ein schematisches Flussdiagramm einer Ausführungsform eines exemplarischen Verfahrens zum Bereitstellen eines Registrierungspassworts,
- Figur 6: ein schematisches Flussdiagramm einer Ausführungsform eines exemplarischen Verfahrens zum Bereitstellen eines Programmmoduls,
- Figur 7: ein schematisches Flussdiagramm einer Ausführungsform eines exemplarischen Verfahrens zum Beglaubigen eines virtuellen Dokuments, und
- Figur 8: ein schematisches Flussdiagramm einer Ausführungsform eines exemplarischen Verfahrens zur Echtheitsprüfung eines virtuellen Dokuments.

Elemente der nachfolgenden Ausführungsformen, die einander entsprechen, werden mit denselben Bezugszeichen gekennzeichnet.

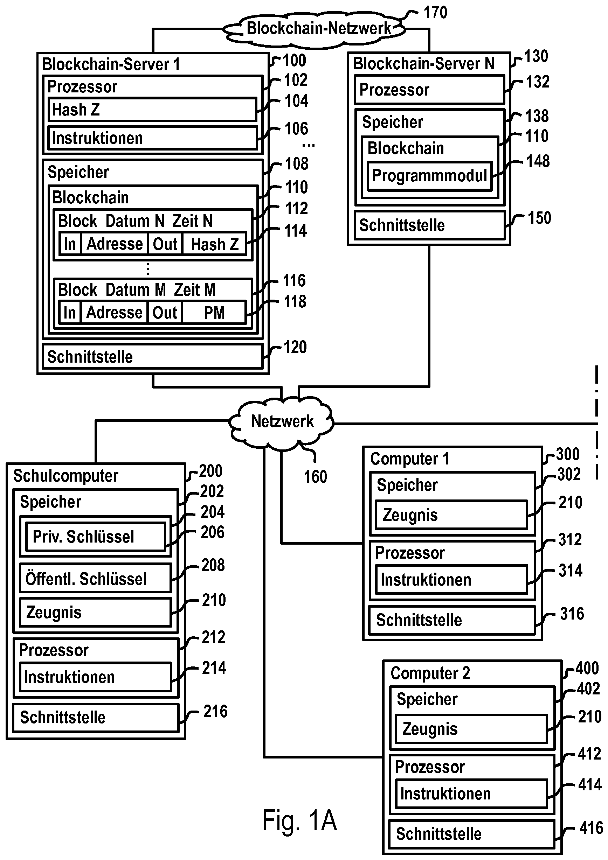

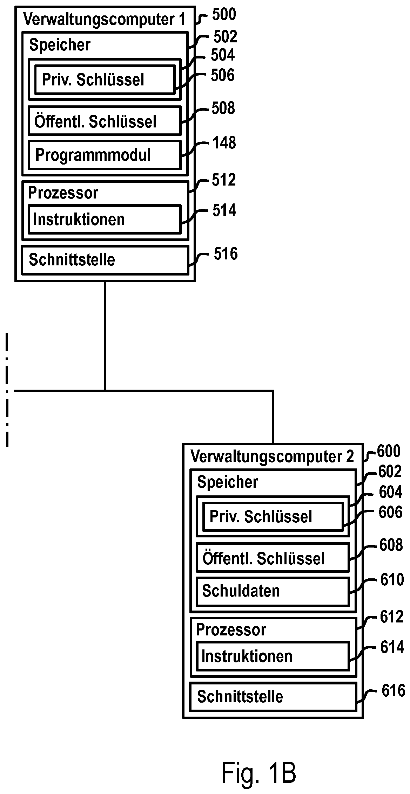

Figuren 1A und 1B zeigen Blockdiagramme einer ersten Ausführungsform eines exemplarischen Systems zum Ausstellen eines virtuellen Dokuments. Bei dem virtuellen Dokument handelt es sich beispielsweise um ein virtuelles Zeugnis 210 und bei dem Aussteller beispielsweise um eine Schule. Das Zeugnis 210 wird von dem Schulcomputersystem 200 durch Ausführen von Programminstruktionen 214 erzeugt und in dem Speicher 202 des Schulcomputersystems 200 gespeichert. Die Programminstruktionen 214 werden von einem Prozessor des Schulcomputersystems 200 ausgeführt. Ferner umfasst der Speicher 202 des Schulcomputersystems 200 einen geschützten Speicherbereich 204 mit privaten kryptographischen Schlüssel 206 eines asymmetrischen Schlüsselpaars, welches der Schule als Aussteller von Zeugnissen wie dem Zeugnis 210 zugeordneten Zeugnis 210 zugeordnet ist. Zudem umfasst der Speicher 202 einen öffentlichen kryptographischen Schlüssel 208. Den privaten kryptographischen Schlüssel 206 verwendet das Schulcomputersystems 200 beispielsweise zum Signieren von Datenobjekten, wie etwa einem Hashwert 104 des Zeugnisses 210, um deren Authentizität zu belegen. Schließlich umfasst das Schulcomputersystem 200 eine Kommunikationsschnittstelle zur Kommunikation über das Netzwerk 160. Bei dem Netzwerk 160 handelt es sich beispielsweise um das Internet. Die Kommunikation über das Netzwerk 160 kann zusätzlich oder alternativ zu einer Signatur mit einem privaten kryptographischen Schlüssel des Senders beispielsweise kryptographisch abgesichert werden durch eine Verschlüsselung der übertragenen Daten mit einem symmetrischen kryptographischen Schlüssel und/oder einem dem Empfänger zugeordneten öffentlichen kryptographischen Schlüssel. Beispielsweise wird ein symmetrischer Schlüssel verwendet, der unter Verwendung der Pseudozufallszahl errechnet wird. Die Verteilung des symmetrischen kryptographischen Schlüssels kann beispielsweise in Form eines hybriden Verschlüsselungsschemas unter Verwendung eines asymmetrischen Schlüsselpaars gesichert werden. Eine hybride Verschlüsselung umfasst eine Kombination aus asymmetrischer Verschlüsselung und symmetrischer Verschlüsselung. Dabei wählt der Sender einen zufälligen symmetrischen Schlüssel, beispielsweise eine Pseudozufallszahl, Session-Key genannt, aus. Mit diesem Session-Key werden die zu schützenden Daten symmetrisch verschlüsselt. Der Session-Key wird mit dem öffentlichen Schlüssel des Empfängers asymmetrisch verschlüsselt. Dieses Vorgehen kann den Vorteil einer sicheren Schlüsselverteilung unter Verwendung asymmetrischer Schlüssel mit dem Geschwindigkeitsvorteil einer symmetrischen Verschlüsselung kombinieren. Nach Ausführungsformen erfolgt eine Übertragung über einen mittels Ende-zu-Ende-Verschlüsselung gesicherte Verbindung. Ferner kann die Übertragung beispielsweise mittels einer geeigneten Transportverschlüsselung gesichert werden, wie etwa HTTPS.

Das Schulcomputersystem 200 berechnet ferner einen Hashwert 104 des Zeugnisses 210 und sendet diesen über das Netzwerk 160 an einen der Blockchain-Server 100, 130 des Blockchain-Netzwerks 170. Zur Berechnung des Hashwerts kann das Schulcomputersystem 200 beispielsweise auf einen eignen Hash-Algorithmus zurückgreifen, welchen die Programminstruktionen 214 umfassen, oder auf einen von dem Blockchain-Server 100 bereitgestellten Hash-Algorithmus. Nach Ausführungsformen umfasst das Blockchain-Netzwerks 170 einen Blockchain-Server 100, nach weiteren Ausführungsformen umfasst das Blockchain-Netzwerks 170 eine Mehrzahl von Blockchain-Servern 100, 130. Nach Ausführungsformen umfasst das Netzwerks 160 das Blockchain-Netzwerks 170.

Der Blockchain-Server 100 umfasst in seinem Speicher 108 die Blockchain 110. Die Blockchain 110 umfasst eine Mehrzahl von Blöcken 112, 116. Nach Ausführungsformen umfassen die Blöcke 112, 116 jeweils eine Zeitangabe, welche den Zeitpunkt der Erstellung des entsprechenden Blocks 112, 116 angibt. Beispielsweise umfasst die Zeitangabe ein Datum und eine Uhrzeit. Nach Ausführungsformen umfassen die Blöcke 112, 116 jeweils einen oder mehrere Einträge 114, 118. Die Einträge 114, 118 umfassen beispielsweise jeweils eine Adresse, welche den Eintrag in der Blockchain identifiziert. Die Einträge 114, 118 können ferner beispielsweise als Transaktionen aufgebaut sein und jeweils eine Ausgangsadresse In und eine Zieladresse Out der entsprechenden Transaktion spezifizieren. Der Eintrag 118 umfasst ferner das Programmmodul (PM) 148, welches Programminstruktionen umfasst. Durch Ausführen dieser Programminstruktionen werden dem Programmmodul 148 zugeordnete Einträge 114 in der Blockchain 110 erstellt oder entsprechende Einträge 114 aufgerufen und ausgewertet. Das Programmmodul 148 kann nach Ausführungsformen auch über mehrere Einträge 118 verteilt gespeichert sein. Durch ein Ausführen der Programminstruktionen des Programmmoduls 148 durch den Prozessor 102 wird beispielsweise der Hash 104 des Zeugnisses 210 in dem Eintrag 114 der Blockchain 110 gespeichert. Durch ein Ausführen der Programminstruktionen kann ferner der Schulcomputersystem 200 und/oder ein Verwaltungscomputersystem 600 einer Verwaltungsinstanz, wie etwa einer Schulbehörde oder eines Verbands, registriert werden. Eine Registrierung umfasst beispielsweise eine Erstellung eines Eintrags in der Blockchain mit einem öffentlichen kryptographischen Schlüssel eines asymmetrischen Schlüsselpaars, welches dem entsprechenden Computersystem 200, 600 zugeordnet ist. Ferner können durch ein Ausführen der Programminstruktionen Registrierungspasswörter für die entsprechenden Registrierungen in der Blockchain hinterlegt werden. Durch ein Ausführen der Programminstruktionen kann der Eintrag des Hashs 104 auch beglaubigt und für die Beglaubigung entrichtete Gebühren können über Transaktionen auf die beteiligten Parteien verteilt werden. Schließlich kann die Authentizität eines Zeugnisses 210 durch Vergleich eines für das Zeugnis berechneten Hashwerts mit dem in der Blockchain hinterlegten Hashwert 104 geprüft werden. Im Falle einer Übereinstimmung ist das Zeugnis 210 authentisch.

Der Blockchain-Server 100 umfasst ferner Programminstruktionen 106, welche beispielsweise die Kommunikation mittels einer Kommunikationsschnittstelle 120 über das Netzwerk 160 und/oder das Blockchain-Netzwerk 170 steuern. Ferner steuern die Programminstruktionen 106 beispielsweise das Speichern und Aufrufen der Blockchain 110. Ferner umfasst der Blockchain-Server 100 beispielsweise ein asymmetrisches Schlüsselpaar (nicht gezeigt) zum Signieren von Daten und/oder Verschlüsseln von Daten.

Die weiteren Blockchain-Server 130 des Blockchain-Netzwerks 170 umfassen ebenfalls Prozessoren 132, Speicher 138 mit der Blockchain und dem Programmmodul 148 sowie Kommunikationsschnittstellen 150. Ferner umfassen die Blockchain-Server 130 beispielsweise jeweils ein asymmetrisches Schlüsselpaar (nicht gezeigt) zum Signieren von Daten und/oder Verschlüsseln von Daten.

Das Computersystem 300 ist beispielsweise ein Computersystem eines Inhabers des Zeugnisses 210. Das virtuelle Zeugnis 210 wird dem Computersystem 300 von dem Schulcomputersystem 200 über das Netzwerk 160 zugesendet. Ein Prozessor 312 des Computersystems 300 ist beispielsweise dazu konfiguriert Programminstruktionen 314 auszuführen. Ein Ausführen der Programminstruktionen 314 steuert beispielsweise das Empfangen und/oder ein Weiterleiten des Zeugnisses 210. Das Computersystem 300 speichert das empfangene Zeugnis 210 beispielsweise in seinem Speicher 302. Zur Kommunikation über das Netzwerk 160 umfasst das Computersystem 300 eine Kommunikationsschnittstelle 316. Ferner umfasst das Computersystem 300 beispielsweise ein asymmetrisches Schlüsselpaar (nicht gezeigt) zum Signieren von Daten und/oder Verschlüsseln von Daten.

Das Computersystem 400 ist beispielsweise ein Computersystem eines Empfängers des Zeugnisses 210. Bei dem Empfänger des Zeugnisses 210 kann es sich beispielsweise um einen potentiellen Arbeitgeber des Zeugnisinhabers handeln, bei welchen sich der Zeugnisinhaber mit dem Zeugnis 210 bewerben möchte. Das virtuelle Zeugnis 210 wird dem Computersystem 400 von dem Computersystem 300 über das Netzwerk 160 zugesendet. Ein Prozessor 412 des Computersystems 300 ist beispielsweise dazu konfiguriert Programminstruktionen 414 auszuführen. Ein Ausführen der Programminstruktionen 414 steuert beispielsweise den Empfang des Zeugnisses 210. Das Computersystem 400 speichert das empfangene Zeugnis 210 beispielsweise in seinem Speicher 402. Zur Kommunikation über das Netzwerk 160 umfasst das Computersystem 400 eine Kommunikationsschnittstelle 346. Ferner umfasst das Computersystem 400 beispielsweise ein asymmetrisches Schlüsselpaar (nicht gezeigt) zum Signieren von Daten und/oder Verschlüsseln von Daten.

Durch ein Ausführen der Programminstruktionen 414 kann ferner ein Hashwert des Zeugnisses 210 berechnet und mit dem in der Blockchain 110 hinterlegten Hashwert 104 verglichen werden. Stimmen beide Hashwerte überein, so handelt es sich bei dem Zeugnis 210, welches der Zeugnisinhaber übersandt hat, um ein authentisches Zeugnis. Zur Berechnung des Hashwerts kann das Computersystem 400 beispielsweise auf einen eigenen Hash-Algorithmus zurückgreifen, welchen die Programminstruktionen 414 umfassen, oder auf einen von dem Blockchain-Server 100 bereitgestellten Hash-Algorithmus.

Bei dem Verwaltungscomputersystem 500 handelt es sich beispielsweise um ein Computersystem einer Verwaltungsinstanz der Blockchain 110 bzw. des Programmmoduls 148. Beispielsweise handelt es sich um einen Provider der Blockchain 110 bzw. des Programmmoduls 148. Ein Prozessor 512 des Verwaltungscomputersystems 500 ist dazu konfiguriert Programminstruktionen 514 auszuführen. Durch ein Ausführen der Programminstruktionen 514 wird beispielsweise das Programmmodul 148 erstellt und über das Netzwerk 160 an Blockchain-Server zum Eintragen in die Blockchain 110 gesendet. Zur Kommunikation über das Netzwerk 160 umfasst das Verwaltungscomputersystem 500 eine Kommunikationsschnittstelle 516. Ferner umfasst der Speicher 502 einen öffentlichen kryptographischen Schlüssel 508 eines dem Provider zugeordneten asymmetrischen Schlüsselpaars. Zudem kann das Verwaltungscomputersystem 500 in einem geschützten Speicherbereich 604 ein privater kryptographischer Schlüssel 504 des asymmetrischen Schlüsselpaars gespeichert sein. Der private kryptographische Schlüssel 504 kann beispielsweise zum Signieren des Programmoduls 148 verwendet werden, wobei die resultierende Signatur mit dem öffentlichen kryptographischen Schlüssel 508 geprüft werden kann. Die Signatur kann einerseits als Nachweis der Authentizität des Programmoduls 148 dienen, zum anderen kann die Signatur als Berechtigungsnachweis des Verwaltungscomputersystem 500 zum Eintragen des Programmmoduls in die Blockchain 110 dienen.

Ferner kann ein Verwaltungscomputersystem 600 einer Verwaltungsinstanz, wie etwa einer Schulbehörde oder eines Verbands, vorgesehen sein. In einem Speicher 602 des Verwaltungscomputersystem 600 sind beispielsweise Daten 610 der Schule mit Schulcomputersystem 200 gespeichert, wie etwa deren Anschrift. Ferner umfasst der Speicher 602 einen öffentlichen kryptographischen Schlüssel 608 eines der Verwaltungsinstanz zugeordneten asymmetrischen Schlüsselpaars. Zudem kann das Verwaltungscomputersystem 600 in einem geschützten Speicherbereich 604 ein privater kryptographischer Schlüssel 604 des asymmetrischen Schlüsselpaars gespeichert sein. Ein Prozessor 612 des Verwaltungscomputersystems 600 ist dazu konfiguriert Programminstruktionen 614 auszuführen. Durch ein Ausführen der Programminstruktionen 614 erfolgt beispielsweise ein Bereitstellen eins Registrierungspassworts zum Registrieren des Schulcomputersystems 200 in einem Eintrag der Blockchain 110. Der private kryptographische Schlüssel 604 kann beispielsweise zum Signieren des Registrierungspassworts verwendet werden, wobei die resultierende Signatur mit dem öffentlichen kryptographischen Schlüssel 608 geprüft werden kann. Ferner wird das entsprechende Registrierungspasswort dem Schulcomputersystem 200 zum Registrieren bereitgestellt. Schließlich umfasst das Verwaltungscomputersystem 600 eine Kommunikationsschnittstelle 616 zur Kommunikation über das Netzwerk 160.

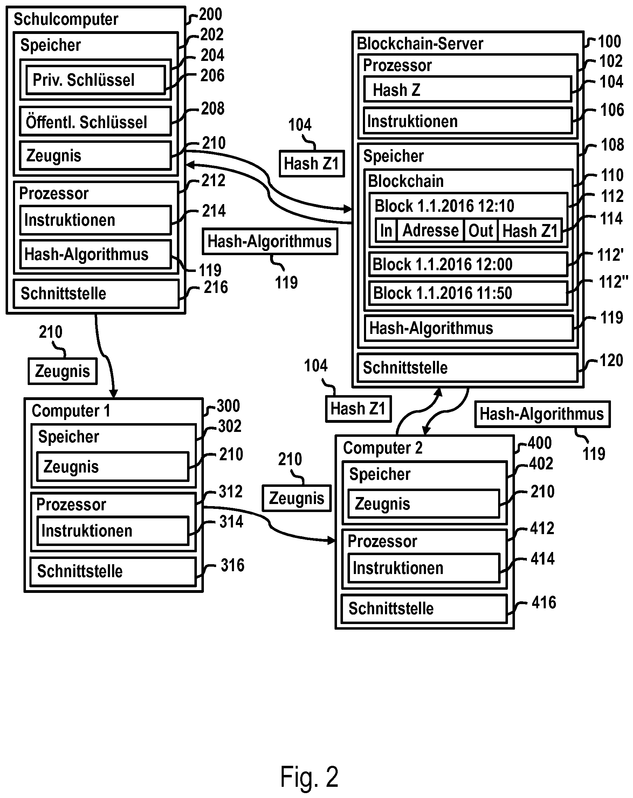

Figur 2 zeigt ein Blockdiagramm einer zweiten Ausführungsform eines exemplarischen Systems zum Ausstellen eines virtuellen Dokuments 210. Die gezeigten Computersysteme, d. h. Schulcomputersystem 200, Blockchain-Server 100, Computersystem 300 und Computersystem 400, sind analog zu den entsprechenden Computersystemen aus Figur 1A ausgestaltet. Figur 2 veranschaulicht die Kommunikation zwischen den Computersystemen detaillierter. Der Schulcomputersystem 200 erzeugt ein virtuelles Dokument in Form des Zeugnisses 210. Für das erstellte Zeugnisses 210 wird ein Hashwert 104 berechnet. Hierzu wird von dem Schulcomputersystem 200 beispielsweise ein von dem Blockchain-Server 100 bereitgestellter Hash-Algorithmus 119 in einem Browser aufgerufen. Der berechnete Hashwert 104 wird an den Blockchain-Server 100 übertragen und von diesem in einen Eintrag 114 eines zusätzlichen Blocks 112 der Blockchain 110 eingetragen.

Das erstellte Zeugnis 210 wird von dem Schulcomputersystem 200 an das Computersystem 300 des Zeugnisinhabers gesendet. Der Zeugnisinhaber leitet das Zeugnis 210 beispielsweise an ein Computersystem 400 weiter. Wenn das Computersystem 400 das von dem Computersystem 300 des Zeugnisinhabers empfangene Zeugnis 210 auf seine Authentizität hin prüfen möchte, berechnet das Computersystem 400 mit einem von dem Blockchain-Server 100 bereitgestellten Hash-Algorithmus 119 den Hashwert 104 und vergleicht diesen mit dem in dem Eintrag 114 der Blockchain 110 gespeicherten Hashwert. Stimmen die beiden Hashwerte überein, so handelt es sich bei dem vorgelegten Zeugnis 210 um ein authentisches Dokument.

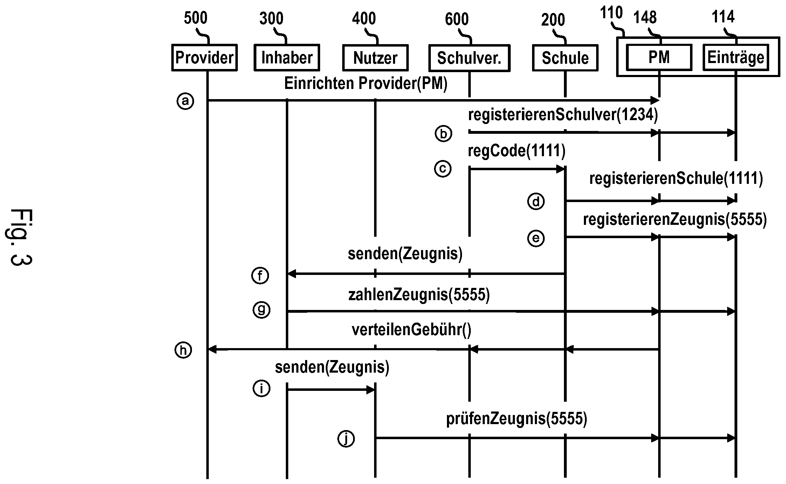

Figur 3 zeigt ein UML-Diagramm einer Ausführungsform eines exemplarischen Verfahrens zum Ausstellen eines virtuellen Dokuments 210. In Schritt ⓐ erzeugt der Provider 500 ein Programmmodul 148, welches in der Blockchain 110 gespeichert wird. In Schritt ⓑ registriert sich eine Verwaltungsinstanz 600, wie etwa eine Schulbehörde oder ein Verband, mit einem Registrierungspasswort 1234. Das entsprechende Registrierungspasswort erhält die Verwaltungsinstanz 600 beispielsweise von dem Provider 500 auf Anfrage per Post. Im Zuge der Registrierung wird beispielsweise ein der Verwaltungsinstanz 600 zugeordneter öffentlicher kryptographischer Schlüssel in einem Eintrag 114 der Blockchain 110 gespeichert. Anhand dieses öffentlichen kryptographischen Schlüssels können Signaturen der Verwaltungsinstanz 600, welche mit einem dem öffentlichen kryptographischen Schlüssel zugeordneten privaten kryptographischen Schlüssel erstellt wurden, geprüft werden. Wenn Einträge in die Blockchain in Form von Transaktionen mit Ausgangs- und Zieladressen erfolgen, kann dieser öffentliche kryptographische Schlüssel zudem als Empfangsadresse der Verwaltungsinstanz 600 dienen. In Schritt ⓒ wird an die Schule 200, welche der Verwaltungsinstanz 600 unterstehen, ein Registrierungspasswort 1111 zum Registrieren der Schule 200 mittels des Programmmoduls 148 in der Blockchain 110 gesendet. Dies kann zur Erhöhung der Sicherheit beispielsweise per Post erfolgen. In Schritt ⓓ registriert sich die Schule mit dem von der Verwaltungsinstanz 600 empfangenen Registrierungspasswort 1111 über das Programmmodul 148 in der Blockchain 110. Hierbei wird beispielsweise ein Eintrag 114 mit einem öffentlichen kryptographischen Schlüssel in der Blockchain 110 erzeugt. Anhand dieses öffentlichen kryptographischen Schlüssels können Signaturen der Schule 200, welche mit einem dem öffentlichen kryptographischen Schlüssel zugeordneten privaten kryptographischen Schlüssel erstellt wurden, geprüft werden. Wenn Einträge in die Blockchain in Form von Transaktionen mit Ausgangs- und Zieladressen erfolgen, kann dieser öffentliche kryptographische Schlüssel zudem als Empfangsadresse der Schule 200 dienen. Nach der Registrierung kann die Schule 200 Zeugnisse registrieren. Hierzu wird in Schritt ⓔ ein Hashwert 5555 für ein Zeugnis berechnet und das Zeugnis mit diesem Hashwert 5555 unter Verwendung des Programmmoduls 148 in einem Eintrag 114 der Blockchain 110 registriert. Da die Schule 200 registriert ist, wird die Eintragung akzeptiert. Mit dieser Registrierung ist das Zeugnis allerdings noch nicht beglaubigt. In Schritt ⓕ wird das Zeugnis zudem von der Schule an den Zeugnisinhaber 300 gesendet. Beispielsweise kann ein beliebiger Nutzer 300, 400, 600, 200 den Status des Zeugnis prüfen. Dabei erhält er beispielsweise die Antwort: Zeugnis kann beglaubigt werden. Der Zeugnisinhaber 300 überweist beispielsweise die Beglaubigungsgebühr, z. B. 5 €, an den Provider 500. Nach alternativen Ausführungsformen kann die Überweisung auch an die Schule 200 oder die Verwaltungsinstanz 600 erfolgen. Die Überweisung kann beispielsweise über die Blockchain erfolgen, wenn diese eine Möglichkeit für Transaktionen einer Kryptowährung bereitstellt. Alternativerweise kann die Überweisung der Beglaubigungsgebühr auch über ein gewöhnliches, beispielsweise von dem Provider 500 gestelltes Girokonto erfolgen. Die Überweisung nennt beispielsweise den Hash 5555 als Verwendungszweck. Ein Skript beim Provider 500 prüft den Eingang von Gebühren und ändert in Schritt ⓖ den Zustand des Zertifikates in der Blockchain 110 von registriert zu bezahlt, d. h. beglaubigt. Hierbei wird eine Beglaubigungsbestätigung in einem Eintrag 114 der Blockchain 110 gespeichert. Ab diesem Zeitpunkt erhält ein Nutzer, welcher den Status des Zeugnisses prüft, als Antwort die Auskunft, dass das Zeugnis beglaubigt ist. In Schritt ⓗ werden die erhaltene Beglaubigungsgebühr auf Schule 200, Verwaltungsinstanz 600 und Provider 500 beispielsweise nach einem vordefinierten Schlüssel verteilt. Dies kann beispielsweise mittels Transaktionen unter Verwendung der Blockchain 110 erfolgen. In Schritt ⓘ sendet der Zeugnisinhaber 300 beispielsweise an den Nutzer 400. Dieser kann in Schritt ⓙ den Status des Zeugnisses prüfen, indem er dessen Hashwert berechnet und den berechneten Hashwert unter Verwendung des Programmmoduls 148 mit dem in einem Eintrag 114 der Blockchain 110 gespeicherten Hashwert vergleicht. Stimmen beide Hashwerte überein, so erhält der Nutzer die Auskunft, dass das Zeugnis authentisch und beglaubigt sei.

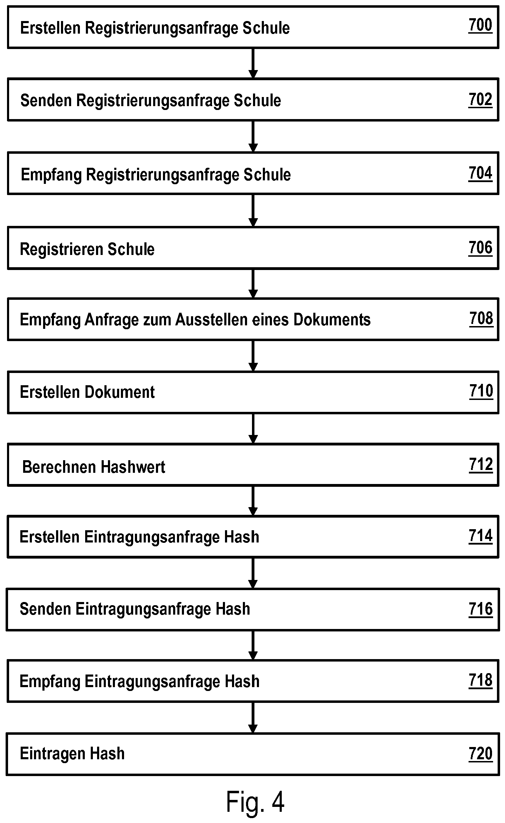

Figur 4 zeigt ein Flussdiagramm einer Ausführungsform eines exemplarischen Verfahrens zum Ausstellen eines virtuellen Dokuments. In Block 700 wird eine Registrierungsanfrage der Schule an einen Blockchain-Server erstellt. In Block 702 wird die Registrierungsanfrage an den Blockchain-Server gesendet. In Block 704 empfängt der Blockchain-Server die Registrierungsanfrage und prüft unter Verwendung eines von der Blockchain bereitgestellten Programmmoduls die Gültigkeit der Registrierungsanfrage. Beispielsweise registriert sich die Schule unter Verwendung eines Registrierungspassworts. Die Registrierungsanfrage ist beispielsweise gültig, wenn das Registrierungspasswort gültig ist. Auf eine gültige Registrierungsanfrage hin wird in Block 706 die Schule durch das Programmmodul in der Blockchain registriert. Hierbei wird beispielsweise ein öffentlicher kryptographischer Schlüssel der Schule in der Blockchain gespeichert. In Block 708 empfängt die Schule eine Anfrage zum Ausstellen eines Dokuments, z. B. eines Zeugnisses. In Block 710 erstellt die Schule das Zeugnis. In Block 712 berechnet die Schule einen Hashwert des erstellten Dokuments. In Block 714 wird eine Eintragungsanfrage zum Eintragen des Hashwerts in die Blockchain erstellt. In Block 716 wird die Eintragungsanfrage von der Schule an einen Blockchain-Server gesendet, welcher die Eintragungsanfrage in Block 718 empfängt. Handelt es sich um eine gültige Eintragungsanfrage, welche beispielsweise eine gültige Signatur mit einem privaten kryptographischen Schlüssel der Schule umfasst, wird der Hashwert in Block 720 in die Blockchain eingetragen und das Zeugnis damit registriert. Das registrierte Zeugnis wird dann beispielsweise von der Schule an den Zeugnisinhaber übersendet.

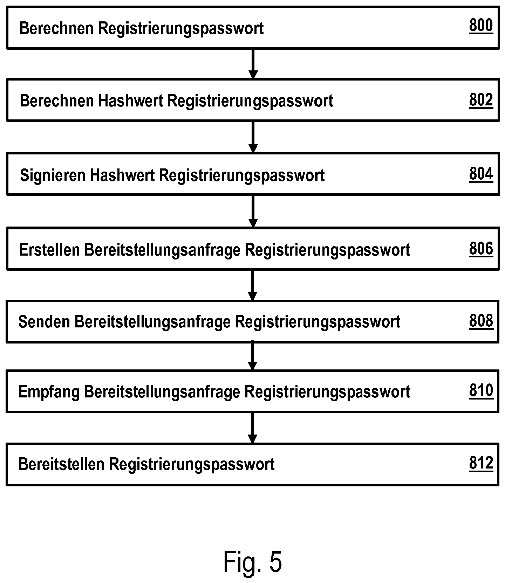

Figur 5 zeigt ein Flussdiagramm einer Ausführungsform eines exemplarischen Verfahrens zum Bereitstellen eines Registrierungspassworts. In Block 800 wird ein Registrierungspasswort von einer Verwaltungsinstanz, welche für die Schule zuständig ist, oder einem Provider der Blockchain bzw. des Programmmoduls, berechnet. In Block 802 wird ein Hashwert des Registrierungspassworts berechnet. In Block 804 wird der Hashwert mit einem privaten kryptographischen Schlüssel der Verwaltungsinstanz bzw. des Providers verschlüsselt. In Block 806 wird eine Bereitstellungsanfrage erstellt und in Block 808 an einen Blockchain-Server gesendet. Der Blockchain-Server empfängt die Bereitstellungsanfrage in Block 810 und speichert das Registrierungspasswort in Block 812 unter Verwendung des Programmmoduls in einem Eintrag der Blockchain, falls die Bereitstellungsanfrage gültig ist. Die Bereitstellungsanfrage ist beispielsweise gültig, falls die Verwaltungsinstanz bzw. der Provider von dem Programmmodul registriert sind, d. h. ein dem Programmmodul zugeordneter Eintrag der Blockchain einen öffentlichen kryptographischen Schlüssel der Verwaltungsinstanz bzw. des Providers umfasst, und die Bereitstellungsanfrage eine Signatur mit einem dem öffentlichen kryptographischen Schlüssel zugeordneten privaten kryptographischen Schlüssel umfasst.

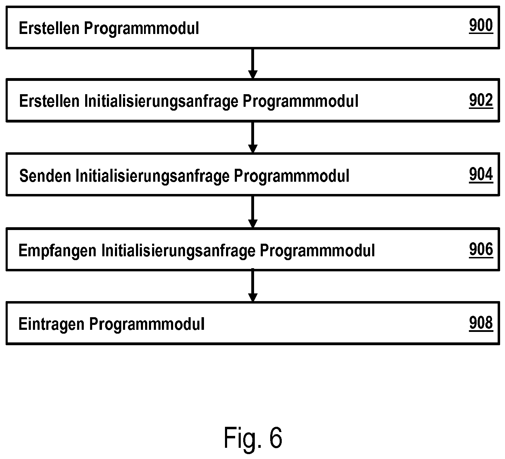

Figur 6 zeigt ein Flussdiagramm einer Ausführungsform eines exemplarischen Verfahrens zum Bereitstellen eines Programmmoduls. In Block 900 wird ein Programmmodul durch einen Provider erstellt. In Block 902 wird eine Initialisierungsanfrage für das Programmmodul erstellt und in Block 904 an einen Blockchain-Server gesendet. In Block 906 wird die Initialisierungsanfrage empfangen und in Block 908 in die Blockchain eingetragen. Nach Ausführungsbeispielen erfolgt die Eintragung, falls Initialisierungsanfrage eine Signatur des Providers umfasst.

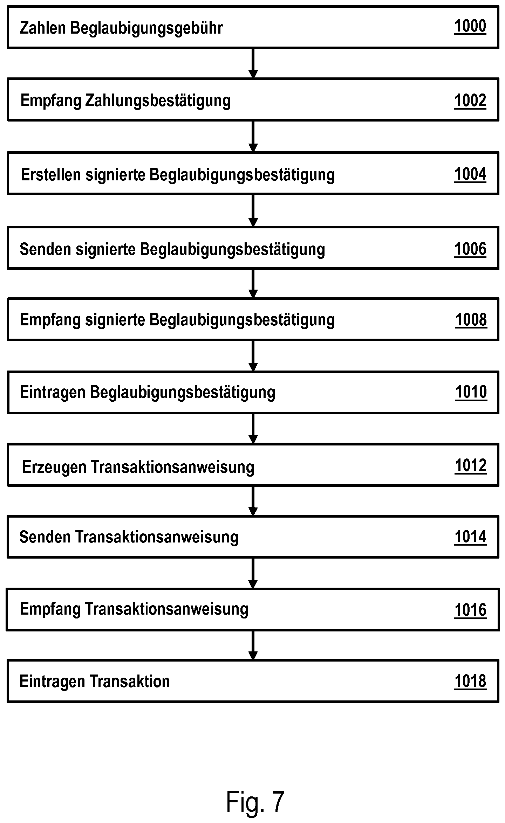

Figur 7 zeigt ein Flussdiagramm einer Ausführungsform eines exemplarischen Verfahrens zum Beglaubigen eines virtuellen Dokuments. In Block 1000 wird eine Beglaubigungsgebühr für ein in der Blockchain eingetragenes Zeugnis gezahlt. Dies kann beispielsweise per Kryptowährung oder auf konventionelle Weise per Überweisung, Kreditkartenzahlung oder über ein Zahlungsservice wie etwa PayPal® erfolgen. In Block 1002 empfängt beispielsweise der Provider eine Zahlungsbestätigung der Beglaubigungsgebühr. Daraufhin erstellt der Provider in Block 1004 eine signierte Beglaubigungsbestätigung, welche er in Block 1006 an einen Blockchain-Server sendet. In Block 1008 empfängt der Blockchain-Server die Beglaubigungsbestätigung und trägt sie in Block 1010 unter Verwendung des Programmmoduls in die Blockchain ein. Nach Ausführungsformen erfolgt die Eintragung, falls die Signatur der Beglaubigungsbestätigung gültig ist. In Block 1012 werden ferner eine oder mehrere Transaktionsanweisungen erzeugt, mit welchen Teile der Beglaubigungsgebühr beispielsweise gemäß einem vordefinierten Verteilungsschlüssel an die Schule, welche das Zeugnis ausgestellt hat, und ggf. eine der Schule übergeordnete Verwaltungsinstanz unter Verwendung einer Kryptowährung überwiesen wird. In Block 1014 wird die Transaktionsanweisung von dem Provider an einen Blockchain-Server gesendet und in Block 1016 von diesem Empfangen. Falls die Transaktionsanweisung gültig ist, d. h. beispielsweise mit einer Signatur des Providers umfasst und der Provider zum Überweisen der angegebenen Beträge berechtigt ist, erfolgt in Block 1018 eine Eintragung der Transaktionen in die Blockchain.

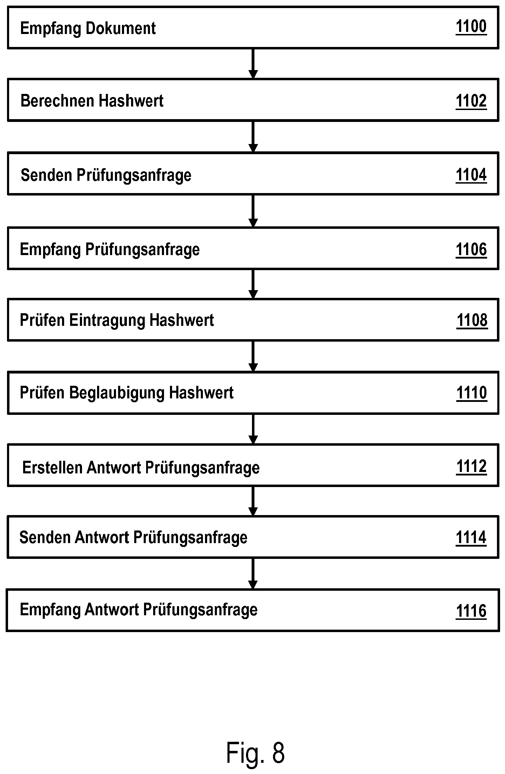

Figur 8 zeigt ein Flussdiagramm einer Ausführungsform eines exemplarischen Verfahrens zur Echtheitsprüfung eines virtuellen Dokuments. In Block 1100 wird das virtuelle Zeugnis von einem Nutzer empfangen. Beispielsweise handelte es sich bei dem Nutzer um einen potentiellen zukünftigen Arbeitgeber, bei welchem sich der Zeugnisinhaber bewirbt. Um die Gültigkeit des vorgelegten Zeugnisses zu prüfen, berechnet der Nutzer in Block 1102 einen Hashwert des Zeugnisses. In Block 1104 wird eine Prüfungsanfrage mit dem Hashwert an einen Blockchain-Server gesendet, welcher die Prüfungsanfrage in Block 1106 empfängt. In Block 1108 wird unter Verwendung des Programmmoduls geprüft, ob der berechnete Hashwert in der Blockchain des Zeugnisses eingetragen ist. Zudem wird in Schritt 1110 geprüft, ob das Zeugnis auch beglaubigt ist, d. h. ob eine Vermerk über die Zahlung der Beglaubigungsgebühren vorliegt. Auf Basis der Prüfergebnisse wird in Block 1112 eine Antwort auf die Prüfanfrage erstellt und in Block 1114 von dem Blockchain-Server an den Nutzer gesandt. In Block 1116 empfängt der Nutzer die Antwort. Falls das Zeugnis eingetragen und beglaubigt, teilt ihm die Antwort dies mit.

### Bezugszeichenliste

- 100: Blockchain-Server
- 102: Prozessor
- 104: Hashwert
- 106: Programminstruktionen
- 108: Speicher
- 110: Blockchain
- 112: Block
- 114: Eintrag
- 116: Block
- 118: Eintrag
- 119: Hash-Algorithmus
- 120: Kommunikationsschnittstelle
- 130: Blockchain-Server
- 132: Prozessor
- 138: Speicher
- 148: Programmmodul
- 150: Kommunikationsschnittstelle
- 160: Netzwerk
- 170: Blockchain-Netzwerk
- 200: Schulcomputersystem
- 202: Speicher
- 204: geschützter Speicherbereich
- 206: privater Schlüssel
- 208: öffentlicher Schlüssel
- 210: Zeugnis
- 212: Prozessor
- 214: Programminstruktionen
- 216: Kommunikationsschnittstelle
- 300: Computersystem (Zeugnisinhaber)
- 302: Speicher
- 312: Prozessor
- 314: Programminstruktionen
- 316: Kommunikationsschnittstelle
- 400: Computersystem (Zeugnisempfänger)
- 402: Speicher
- 412: Prozessor
- 414: Programminstruktionen
- 416: Kommunikationsschnittstelle
- 500: Verwaltungscomputersystem (Blockchain)
- 502: Speicher
- 504: geschützter Speicherbereich
- 506: privater Schlüssel
- 508: öffentlicher Schlüssel
- 512: Prozessor
- 514: Programminstruktionen
- 516: Kommunikationsschnittstelle
- 600: Verwaltungscomputersystem (Schulen)
- 602: Speicher
- 604: geschützter Speicherbereich
- 606: privater Schlüssel
- 608: öffentlicher Schlüssel
- 612: Prozessor
- 614: Programminstruktionen
- 616: Kommunikationsschnittstelle

## Patentansprüche

1. Verfahren zum Ausstellen eines virtuellen Dokuments (210) mittels eines ersten Computersystems (200) eines Ausstellers, wobei das erste Computersystem (200) einen Speicher (202) umfasst, wobei in dem Speicher (202) ein öffentlicher kryptographischer Schlüssel (208) eines dem Aussteller zugeordneten asymmetrischen Schlüsselpaars gespeichert ist, wobei in einem geschützten Speicherbereich (204) des Speichers (202) ein privater kryptographischer Schlüssel (206) des asymmetrischen Schlüsselpaars des Ausstellers gespeichert ist, wobei das erste Computersystem (200) eine Kommunikationsschnittstelle (216) zur Kommunikation über ein Netzwerk (160) umfasst,
wobei das virtuelle Dokument (210) unter Verwendung einer Blockchain (110) ausgestellt wird, wobei die Blockchain (110) in einem Block (116) ein Programmmodul (148) mit ersten und zweiten Programminstruktionen umfasst, wobei durch Ausführen der Programminstruktionen dem Programmmodul (148) zugeordnete Einträge (112) in der Blockchain (110) erzeugt werden,
wobei das Verfahren umfasst:
• Erstellen einer Registrierungsanfrage durch das erste Computersystem (200), wobei die Registrierungsanfrage den öffentlichen kryptographischen Schlüssel (208) des Ausstellers umfasst und das Programmmodul (148) identifiziert,
• Senden der Registrierungsanfrage durch das erste Computersystem (200) über das Netzwerk an einen ersten Blockchain-Server (100, 130), wobei der erste Blockchain-Server (100, 130) dazu konfiguriert ist, Blöcke der Blockchain (110) zu erzeugen,
• Empfangen der Registrierungsanfrage durch den ersten Blockchain-Server (100, 130),
• Ausführen der ersten Programminstruktionen des durch die Registrierungsanfrage identifizierten Programmmoduls (148) durch den ersten Blockchain-Server (100, 130), wobei das Ausführen der ersten Programminstruktionen ein Prüfen der Gültigkeit der Registrierungsanfrage umfasst und, im Falle einer gültigen Registrierungsanfrage, zum Registrieren des öffentlichen kryptographischen Schlüssels (208) des Ausstellers ein Erzeugen eines ersten zusätzlichen Blocks der Blockchain (110), wobei der erzeugte erste Block einen dem Programmmodul (148) zugeordneten ersten Eintrag mit dem öffentlichen kryptographischen Schlüssel (208) des Ausstellers umfasst,
• Empfangen einer Anfrage durch das erste Computersystem (200) zum Ausstellen des virtuellen Dokuments (210),
• Erstellen des virtuellen Dokuments (210) durch das erste Computersystem (200),
• Berechnen eines ersten Hashwerts (104) des virtuellen Dokuments (210) durch das erste Computersystem (200),
• Erstellen einer mit dem privaten kryptographischen Schlüssel (206) des Ausstellers signierten Eintragungsanfrage durch das erste Computersystem (200), wobei die Eintragungsanfrage den ersten Hashwert (104) umfasst und das Programmmodul (148) identifiziert,
• Senden der signierten Eintragungsanfrage durch das erste Computersystem (200) über das Netzwerk an einen zweiten Blockchain-Server (100, 130), welcher dazu konfiguriert ist, Blöcke der Blockchain (110) zu erzeugen,
• Empfangen der signierten Eintragungsanfrage durch den zweiten Blockchain-Server (100, 130),
• Ausführen der zweiten Programminstruktionen des durch die signierte Eintragungsanfrage identifizierten Programmmoduls (148) durch den zweiten Blockchain-Server (100, 130), wobei das Ausführen der zweiten Programminstruktionen ein Prüfen der Signatur der Eintragungsanfrage unter Verwendung des in der Blockchain (110) registrierten öffentlichen kryptographischen Schlüssels (208) des Ausstellers umfasst, und, im Falle einer gültigen Signatur, zum Ausstellen des virtuellen Dokuments (210) ein Erzeugen eines zweiten zusätzlichen Blocks (112) der Blockchain (110), wobei der erzeugte zweite Block (114) einen dem Programmmodul (148) zugeordneten zweiten Eintrag mit dem ersten Hashwert (104) umfasst.

2. Verfahren nach Anspruch 1, wobei die Registrierungsanfrage ein Registrierungspasswort umfasst und wobei das Prüfen der Gültigkeit der Registrierungsanfrage ein Prüfen der Gültigkeit des Registrierungspassworts umfasst.

3. Verfahren nach einem der vorangehenden Ansprüche, wobei das Verfahren ferner umfasst:
Senden des virtuellen Dokuments (210) an ein zweites Computersystem (300) in Antwort auf die Anfrage zum Ausstellen des virtuellen Dokuments (210), und/oder
wobei die Registrierungsanfrage zudem eine Aussteller-ID umfasst, welche bei einer erfolgreichen Prüfung des Registrierungspassworts zusammen mit dem öffentlichen kryptographischen Schlüssel (208) in den zweiten Block (112) der Blockchain (110) eingetragen wird, und/oder
wobei das Prüfen des Registrierungspassworts umfasst:
• Vergleichen des empfangenen Registrierungspassworts durch den ersten Blockchain-Server (100, 130) mit einem in der Blockchain (110) gespeicherten Registrierungspassworts,
• im Falle einer Übereinstimmung des empfangenen Registrierungspassworts mit dem gespeicherten Registrierungspasswort, bestätigen der Gültigkeit des empfangenen Registrierungspassworts durch den ersten Blockchain-Server (100, 130), und/oder
wobei es sich bei dem virtuellen Dokument (210) um ein virtuelles Zeugnis handelt.

4. Verfahren nach einem der vorangehenden Ansprüche, wobei das Registrierungspasswort in Form eines in der Blockchain (110) signierten gespeicherten zweiten Hashwerts bereitgestellt wird, wobei das Vergleichen des empfangenen Registrierungspassworts mit dem gespeicherten Registrierungspasswort umfasst:
• Prüfen der Gültigkeit der Signatur des gespeicherten zweiten Hashwerts,
• Berechnen eines dritten Hashwerts des empfangenen Registrierungspassworts,
• Vergleichen des berechneten dritten Hashwerts mit dem gespeicherten zweiten Hashwert.

5. Verfahren nach Anspruch 4, wobei das Programmmodul (148) dritte Programminstruktionen umfasst und wobei das Bereitstellen des Registrierungspassworts umfasst:
• Berechnen des zweiten Hashwerts des Registrierungspassworts durch ein erstes Verwaltungscomputersystem (500, 600) einer ersten Verwaltungsinstanz,
• Signieren des zweiten Hashwerts mit einem privaten kryptographischen Schlüssel (506, 606) eines der ersten Verwaltungsinstanz zugeordneten asymmetrischen Schlüsselpaars,
• Erstellen einer Bereitstellungsanfrage durch das erste Verwaltungscomputersystem (500, 600), wobei die Bereitstellungsanfrage den signierten zweiten Hashwert umfasst und das Programmmodul (148) identifiziert,
• Senden der Bereitstellungsanfrage durch das erste Verwaltungscomputersystem (500, 600) an einen dritten Blockchain-Server (100, 130), welcher dazu konfiguriert ist, Blöcke der Blockchain (110) zu erzeugen,
• Empfangen der Bereitstellungsanfrage durch den dritten Blockchain-Server (100, 130),
• Ausführen der dritten Programminstruktionen des durch die Bereitstellungsanfrage identifizierten Programmmoduls (148) durch den dritten Blockchain-Server (100, 130), wobei das Ausführen der dritten Programminstruktionen ein Prüfen der Signatur des zweiten Hashwerts durch den dritten Blockchain-Server (100, 130) unter Verwendung eines öffentlichen kryptographischen Schlüssels (508, 608) des der ersten Verwaltungsinstanz zugeordneten asymmetrischen Schlüsselpaars umfasst, und, im Falle einer gültigen Signatur, Erzeugen eines dritten zusätzlichen Blocks der Blockchain (110) durch den dritten Blockchain-Server (100, 130), wobei der erzeugte dritte Block einen dem Programmmodul (148) zugeordneten dritten Eintrag mit dem signierten zweiten Hashwert umfasst.

6. Verfahren nach Anspruch 5, wobei der öffentliche kryptographische Schlüssel (508, 608) der ersten Verwaltungsinstanz in der Blockchain (110) gespeichert ist und der dritte Blockchain-Server (100, 130) zum Prüfen der Signatur des zweiten Hashwerts den in der Blockchain (110) gespeicherten öffentlichen kryptographischen Schlüssel (508, 608) des ersten Verwaltungscomputersystems (500, 600) verwendet.

7. Verfahren nach einem der Ansprüche 5 bis 6, wobei das Verfahren ferner umfasst:
• Senden einer Passwortanfrage zum Erhalten des Registrierungspassworts durch das erste Computersystem (200) an das erste Verwaltungscomputersystem (500, 600), wobei die Passwortanfrage den Aussteller identifiziert,
wobei das Verfahren ferner durch die erste Verwaltungsinstanz unter Verwendung des ersten Verwaltungscomputersystems (500, 600) umfasst:
• Empfangen der Passwortanfrage,
• Identifizieren einer dem Aussteller zugeordneten Postanschrift,
• Erstellen eines an die identifizierte Postanschrift adressierten Antwortschreibens, welches das Registrierungspasswort umfasst,
• Senden des Antwortschreibens per Post,
oder wobei das Verfahren ferner umfasst:
• Senden einer Passwortanfrage zum Erhalten des Registrierungspassworts durch das erste Computersystem (200) an das erste Verwaltungscomputersystem (500, 600), wobei die Passwortanfrage den Aussteller identifiziert,
wobei das Verfahren ferner durch die erste Verwaltungsinstanz unter Verwendung des ersten Verwaltungscomputersystems (500, 600) umfasst:
• Empfangen der Passwortanfrage,
• Erstellen einer Antwort auf die Passwortanfrage, welche das Registrierungspasswort umfasst,
• Senden der Antwort in kryptographisch gesicherter Form an das erste Computersystem (200) des Ausstellers.

8. Verfahren nach einem der vorangehenden Ansprüche, wobei das Verfahren ferner umfasst:
• Erstellen des Programmmoduls (148) durch ein zweites Verwaltungscomputersystem (500) einer zweiten Verwaltungsinstanz,
• Erstellen einer signierten Initialisierungsanfrage durch das zweite Verwaltungscomputersystem (500) mit dem Programmmodul (148),
• Senden der Initialisierungsanfrage durch das zweite Verwaltungscomputersystem (500) an einen vierten Blockchain-Server (100, 130), welcher dazu konfiguriert ist, Blöcke der Blockchain (110) zu erzeugen,
• Empfangen des Programmmoduls (148) durch den vierten Blockchain-Server (100, 130),
• Prüfen der Signatur der Initialisierungsanfrage durch den vierten Blockchain-Server (100, 130) unter Verwendung des öffentlichen kryptographischen Schlüssels (508, 608) des der zweiten Verwaltungsinstanz zugeordneten asymmetrischen Schlüsselpaars, und, im Falle einer gültigen Signatur, Erzeugen eines vierten zusätzlichen Blocks (116) der Blockchain (110) durch den vierten Blockchain-Server (100, 130), wobei der erzeugte vierte Block (116) einen vierten Eintrag (118) mit dem Programmmodul (148) umfasst.

9. Verfahren nach einem der vorangehenden Ansprüche, wobei das Programmmodul (148) vierte Programminstruktionen umfasst und wobei das Verfahren ferner umfasst:
• Empfangen einer ersten Zahlungsbestätigung einer Beglaubigungsgebühr für das Ausstellen des virtuellen Dokuments (210) durch das zweite Verwaltungscomputersystem (500),
• Erstellen einer ersten Beglaubigungsbestätigung durch das zweite Verwaltungscomputersystem (500), wobei die Beglaubigungsbestätigung den signierten ersten Hashwert (104) des virtuellen Dokuments (210) umfasst und das Programmmodul (148) identifiziert,
• Signieren der ersten Beglaubigungsbestätigung durch das zweite Verwaltungscomputersystem (500) mit dem privaten kryptographischen Schlüssel (506) der zweiten Verwaltungsinstanz,
• Senden der signierten ersten Beglaubigungsbestätigung an einen fünften Blockchain-Server (100, 130), welcher dazu konfiguriert ist, Blöcke der Blockchain (110) zu erzeugen,
• Empfangen der ersten Beglaubigungsbestätigung durch den fünften Blockchain-Server (100, 130),
• Ausführen der vierten Programminstruktionen des durch die Beglaubigungsbestätigung identifizierten Programmmoduls (148) durch den fünften Blockchain-Server (100, 130), wobei das Ausführen der vierten Programminstruktionen ein Prüfen der Signatur der ersten Beglaubigungsbestätigung durch den fünften Blockchain-Server (100, 130) unter Verwendung des öffentlichen kryptographischen Schlüssels (508) der zweiten Verwaltungsinstanz umfasst und, im Falle einer gültigen Signatur, Erzeugen eines fünften zusätzlichen Blocks der Blockchain (110) durch den fünften Blockchain-Server (100, 130), wobei der erzeugte fünfte Block einen dem Programmmodul (148) zugeordneten fünften Eintrag mit der signierten ersten Beglaubigungsbestätigung umfasst.

10. Verfahren nach Anspruch 9, wobei das Programmmodul (148) fünfte Programminstruktionen umfasst und wobei das Verfahren ferner umfasst:
• Erzeugen einer Transaktionsanweisung durch das zweite Verwaltungscomputersystem (500) zur Transaktion zumindest eines Teilbetrags der Beglaubigungsgebühr in Form einer in der Blockchain (110) implementierten Kryptowährung von einer der zweiten Verwaltungsinstanz zugeordneten Ausgangsadresse auf eine dem Aussteller zugeordnete Zieladresse,
• Signieren der Transaktionsanweisung mit einem privaten kryptographischen Schlüssel (506) eines der Ausgangsadresse zugeordneten asymmetrischen Schlüsselpaars,
• Senden der Transaktionsanweisung an einen sechsten Blockchain-Server (100, 130), welcher dazu konfiguriert ist, Blöcke der Blockchain (110) zu erzeugen,
• Empfangen der Transaktionsanweisung durch den sechsten Blockchain-Server (100, 130),
• Ausführen der fünften Programminstruktionen des durch die Bereitstellungsanfrage identifizierten Programmmoduls (148) durch den sechsten Blockchain-Server (100, 130), wobei das Ausführen der fünften Programminstruktionen ein Prüfen der Signatur der Transaktionsanweisung durch den sechsten Blockchain-Server (100, 130) unter Verwendung der Ausgangsadresse umfasst und, im Falle einer gültigen Signatur, ein Erzeugen eines sechsten zusätzlichen Blocks der Blockchain (110) durch den sechsten Blockchain-Server (100, 130), wobei der erzeugte sechste Block einen dem Programmmodul (148) zugeordneten sechsten Eintrag mit der Transaktionsanweisung umfasst.

11. Verfahren nach einem Ansprüche 1 bis 8, wobei das Programmmodul (148) sechste Programminstruktionen umfasst und wobei das Verfahren ferner umfasst:
• Empfangen einer zweiten Zahlungsbestätigung der Beglaubigungsgebühr für das Ausstellen des virtuellen Dokuments (210) durch das erste Computersystem (200),
• Erstellen einer zweiten Beglaubigungsbestätigung durch das erste Computersystem (200), wobei die Beglaubigungsbestätigung den signierten ersten Hashwert (104) des virtuellen Dokuments (210) umfasst und das Programmmodul (148) identifiziert,
• Signieren der zweiten Beglaubigungsbestätigung durch das erste Computersystem (200) mit dem privaten kryptographischen Schlüssel (206) des Ausstellers,
• Senden der signierten zweiten Beglaubigungsbestätigung an einen siebten Blockchain-Server (100, 130), welcher dazu konfiguriert ist, Blöcke der Blockchain (110) zu erzeugen,
• Empfangen der zweiten Beglaubigungsbestätigung durch den siebten Blockchain-Server (100, 130),
• Ausführen der sechsten Programminstruktionen des durch die zweite Beglaubigungsbestätigung identifizierten Programmmoduls (148) durch den siebten Blockchain-Server (100, 130), wobei das Ausführen der sechsten Programminstruktionen ein Prüfen der Signatur der zweiten Beglaubigungsbestätigung durch den siebten Blockchain-Server (100, 130) unter Verwendung des öffentlichen kryptographischen Schlüssels (208) des Ausstellers umfasst und, im Falle einer gültigen Signatur, ein Erzeugen eines siebten zusätzlichen Blocks der Blockchain (110) durch den siebten Blockchain-Server (100, 130), wobei der erzeugte siebte Block einen dem Programmmodul (148) zugeordneten siebten Eintrag mit der signierten zweiten Beglaubigungsbestätigung umfasst.

12. Verfahren nach einem der vorangehenden Ansprüche, wobei das Verfahren ferner umfasst:
• Empfangen des virtuellen Dokuments (210) durch ein drittes Computersystem (400),
• Berechnen des ersten Hashwerts (104) des virtuellen Dokuments (210) durch das dritte Computersystem,
• Abfrage der Blockchain (110) nach einem Eintrag mit dem ersten Hashwert (104) des virtuellen Dokuments (210) durch das dritte Computersystem (400),
• im Falle der Existenz des ersten Eintrags mit dem ersten Hashwert (104) des virtuellen Dokuments (210), ohne das ein Eintrag mit einer Beglaubigungsbestätigung existiert, Bestätigen der Existenz des virtuellen Dokuments (210).

13. Verfahren nach Anspruch 12, wobei die Bestätigung der Existenz des virtuellen Dokuments (210) einen Hinweis auf eine mögliche Beglaubigung durch Zahlung der Beglaubigungsgebühr umfasst, und/oder
wobei das Verfahren ferner umfasst:
im Falle der Existenz des Eintrags mit dem ersten Hashwert (104) des virtuellen Dokuments (210) sowie eines Eintrags mit einer Beglaubigungsbestätigung für den ersten Hashwert (104), Bestätigen der Beglaubigung des virtuellen Dokuments (210).

14. System, welches ein erstes einem Aussteller zugeordnetes Computersystem (200) umfasst, das zum Ausführen eines Verfahren nach einem der Ansprüche 1 bis 13 konfiguriert ist.

15. System nach Anspruch 14, welches ferner ein erstes Verwaltungscomputersystem (500, 600) umfasst, das einer ersten Verwaltungsinstanz zugeordnet und zum Ausführen eines Verfahren nach einem der Ansprüche 5 bis 13 konfiguriert ist, und/oder
welches ferner ein zweites Verwaltungscomputersystem (500) umfasst, das einer zweiten Verwaltungsinstanz zugeordnet und zum Ausführen eines Verfahren nach einem der Ansprüche 8 bis 13 konfiguriert ist, und/oder
welches ferner ein drittes Computersystem (400) umfasst, das zum Ausführen eines Verfahren nach einem der Ansprüche 12 bis 13 konfiguriert ist, und/oder
welches ferner zumindest einen Blockchain-Server (100, 130) umfasst, welcher zum Ausführen eines Verfahren nach einem der Ansprüche 1 bis 13 konfiguriert ist.

## Claims

1. A method for issuing a virtual document (210) by means of a first computer system (200) of an issuer, wherein the first computer system (200) comprises a memory (202), wherein a public cryptographic key (208) of an asymmetric key pair associated with the issuer is stored in the memory (202), wherein a private cryptographic key (206) of the asymmetric key pair of the issuer is stored in a protected memory area (204) of the memory (202), wherein the first computer system (200) comprises a communication interface (216) for communicating via a network (160),
wherein the virtual document (210) is issued using a blockchain (110), wherein the blockchain (110) in a block (116) comprises a program module (148) containing first and second program instructions, wherein entries (112) associated with the program module (148) are generated in the blockchain (110) as a result of the execution of the program instructions,
wherein the method comprises:
• creating a registration request by the first computer system (200), wherein the registration request comprises the public cryptographic key (208) of the issuer and identifies the program module (148);
• sending the registration request by the first computer system (200) via the network to a first blockchain server (100, 130), wherein the first blockchain server (100, 130) is configured to generate blocks of the blockchain (110);
• receiving the registration request by the first blockchain server (100, 130);
• executing, by the first blockchain server (100, 130), the first program instructions of the program module (148) identified by the registration request, wherein the execution of the first program instructions comprises checking the validity of the registration request and, if the registration request is valid, generating a first additional block of the blockchain (110) for the registration of the public cryptographic key (208) of the issuer, wherein the generated first block comprises a first entry which is associated with the program module (148) and which contains the public cryptographic key (208) of the issuer;
• receiving a request by the first computer system (200) for the issue of the virtual document (210);
• creating a virtual document (210) by the first computer system (200);
• calculating a first hash value (104) of the virtual document (210) by the first computer system (200);
• creating, by the first computer system (200), an entry request signed with the private cryptographic key (206) of the issuer, wherein the entry request comprises the first hash value (104) and identifies the program module (148);
• sending the signed entry request by the first computer system (200) via the network to a second blockchain server (100, 130), which is configured to generate blocks of the blockchain (110);
• receiving the signed entry request by the second blockchain server (100, 130);
• executing, by the second blockchain server (100, 130), the second program instructions of the program module (148) identified by the signed entry request, wherein the execution of the second program instructions comprises checking the signature of the entry request, using the public cryptographic key (208) of the issuer registered in the blockchain (110), and, if the signature is valid, generating a second additional block (112) of the blockchain (110) for the issue of the virtual document (210), wherein the generated second block (114) comprises a second entry which is associated with the program module (148) and which contains the first hash value (104).

2. The method according to claim 1, wherein the registration request comprises a registration password, and wherein checking the validity of the registration request comprises checking the validity of the registration password.

3. The method according to one of the preceding claims, wherein the method further comprises:
sending the virtual document (210) to a second computer system (300) in response to the request for the issue of a virtual document (210), and/or
wherein the registration request additionally comprises an issuer ID, which is entered into the second block (112) of the blockchain (110) together with the public cryptographic key (208) if the registration password was checked successfully, and/or
wherein checking the registration password comprises:
• comparing the received registration password by the first blockchain server (100, 130) to a registration password stored in the blockchain (110); and
• if the received registration password agrees with the stored registration password, confirming the validity of the received registration password by the first blockchain server (100, 130), and/or
wherein the virtual document (210) is a virtual credential.

4. The method according to one of the preceding claims, wherein the registration password is provided in the form of a signed second hash value stored in the blockchain (110), wherein the comparison of the received registration password to the stored registration password comprises:
• checking the validity of the signature of the stored second hash value;
• calculating a third hash value of the received registration password; and
• comparing the calculated third hash value to the stored second hash value.

5. The method according to claim 4, wherein the program module (148) comprises third program instructions, and wherein the provision of the registration password comprises:
• calculating the second hash value of the registration password by a first management computer system (500, 600) of a first management entity;
• signing the second hash value with a private cryptographic key (506, 606) of an asymmetric key pair associated with the first management entity;
• creating a provision request by the first management computer system (500, 600), wherein the provision request comprises the signed second hash value and identifies the program module (148);
• sending the provision request by the first management computer system (500, 600) to a third blockchain server (100, 130), which is configured to generate blocks of the blockchain (110);
• receiving the provision request by the third blockchain server (100, 130); and
• executing, by the third blockchain server (100, 130), the third program instructions of the program module (148) identified by the provision request, wherein the execution of the third program instructions comprises checking the signature of the second hash value by the third blockchain server (100, 130), using a public cryptographic key (508, 608) of the asymmetric key pair associated with the first management entity, and, if the signature is valid, generating a third additional block of the blockchain (110) by the third blockchain server (100, 130), wherein the generated third block comprises a third entry which is associated with the program module (148) and which contains the signed second hash value.

6. The method according to claim 5, wherein the public cryptographic key (508, 608) of the first management entity is stored in the blockchain (110), and the third blockchain server (100, 130) uses the public cryptographic key (508, 608) of the first management computer system (500, 600) stored in the blockchain (110) for checking the signature of the second hash value.

7. The method according to one of claims 5 to 6, wherein the method further comprises:
• sending a password request for receiving the registration password by the first computer system (200) to the first management computer system (500, 600), wherein the password request identifies the issuer;
wherein the method further comprises, by the first management entity, with use of the first management computer system (500, 600):
• receiving the password request;
• identifying a mailing address associated with the issuer;
• creating a response letter which is addressed to the identified mailing address and which comprises the registration password; and
• sending the response letter by mail;
or wherein the method further comprises:
• sending a password request for receiving the registration password by the first computer system (200) to the first management computer system (500, 600), wherein the password request identifies the issuer;
wherein the method further comprises, by the first management entity, with use of the first management computer system (500, 600):
• receiving the password request;
• creating a response to the password request, which comprises the registration password; and
• sending the response in cryptographically secured form to the first computer system (200) of the issuer.

8. The method according to one of the preceding claims, wherein the method further comprises:
• creating the program module (148) by a second management computer system (500) of a second management entity;
• creating a signed initialisation request by the second management computer system (500) with the program module (148);
• sending the initialisation request by the second management computer system (500) to a fourth blockchain server (100, 130), which is configured to generate blocks of the blockchain (110);
• receiving the program module (148) by the fourth blockchain server (100, 130);
• checking the signature of the initialisation request by the fourth blockchain server (100, 130) using the public cryptographic key (508, 608) of the asymmetric key pair associated with the second management entity, and, if the signature is valid, generating a fourth additional block (116) of the blockchain (110) by the fourth blockchain server (100, 130), wherein the generated fourth block (116) comprises a fourth entry (118) with the program module (148).

9. The method according to one of the preceding claims, wherein the program module (148) comprises fourth program instructions, and wherein the method further comprises:
• receiving a first payment confirmation of a notarisation fee for the issue of the virtual document (210) by the second management computer system (500);
• creating a first notarisation confirmation by the second management computer system (500), wherein the notarisation confirmation comprises the signed first hash value (104) of the virtual document (210) and identifies the program module (148);
• signing the first notarisation confirmation by the second management computer system (500) with the private cryptographic key (506) of the second management entity;
• sending the signed first notarisation confirmation to a fifth blockchain server (100, 130), which is configured to generate blocks of the blockchain (110);
• receiving the first notarisation confirmation by the fifth blockchain server (100, 130); and
• executing, by the fifth blockchain server (100, 130), the fourth program instructions of the program module (148) identified by the notarisation confirmation, wherein the execution of the fourth program instructions comprises checking the signature of the first notarisation confirmation by the fifth blockchain server (100, 130), using the public cryptographic key (508) of the second management entity, and, if the signature is valid, generating a fifth additional block of the blockchain (110) by the fifth blockchain server (100, 130), wherein the generated fifth block comprises a fifth entry which is associated with the program module (148) and which contains the signed first notarisation confirmation.

10. The method according to claim 9, wherein the program module (148) comprises fifth program instructions, and wherein the method further comprises:
• generating a transaction order by the second management computer system (500) for the transaction of at least a partial amount of the notarisation fee in the form of a cryptocurrency implemented in the blockchain (110) from a starting address, associated with the second management entity, to a destination address, associated with the issuer;
• signing the transaction order with a private cryptographic key (506) of an asymmetric key pair associated with the starting address;
• sending the transaction order to a sixth blockchain server (100, 130), which is configured to generate blocks of the blockchain (110);
• receiving the transaction order by the sixth blockchain server (100, 130); and
• executing, by the sixth blockchain server (100, 130), the fifth program instructions of the program module (148) identified by the provision request, wherein the execution of the fifth program instructions comprises checking the signature of the transaction order by the sixth blockchain server (100, 130), using the starting address, and, if the signature is valid, generating a sixth additional block of the blockchain (110) by the sixth blockchain server (100, 130), wherein the generated sixth block comprises a sixth entry which is associated with the program module (148) and which contains the transaction order.

11. The method according to one of claims 1 to 8, wherein the program module (148) comprises sixth program instructions, and wherein the method further comprises:
• receiving a second payment confirmation of the notarisation fee for the issue of the virtual document (210) by the first computer system (200);
• creating a second notarisation confirmation by the first computer system (200), wherein the notarisation confirmation comprises the signed first hash value (104) of the virtual document (210) and identifies the program module (148);
• signing the second notarisation confirmation by the first computer system (200) with the private cryptographic key (206) of the issuer;
• sending the signed second notarisation confirmation to a seventh blockchain server (100, 130), which is configured to generate blocks of the blockchain (110);
• receiving the second notarisation confirmation by the seventh blockchain server (100, 130); and
• executing, by the seventh blockchain server (100, 130), the sixth program instructions of the program module (148) identified by the second notarisation confirmation, wherein the execution of the sixth program instructions comprises checking the signature of the second notarisation confirmation by the seventh blockchain server (100, 130), with use of the public cryptographic key (208) of the issuer, and, if the signature is valid, generating a seventh additional block of the blockchain (110) by the seventh blockchain server (100, 130), wherein the generated seventh block comprises a seventh entry which is associated with the program module (148) and which contains the signed second notarisation confirmation.

12. The method according to one of the preceding claims, wherein the method further comprises:
• receiving the virtual document (210) by a third computer system (400);
• calculating the first hash value (104) of the virtual document (210) by the third computer system;
• interrogating the blockchain (110) for an entry containing the first hash value (104) of the virtual document (210) by the third computer system (400); and
• if the first entry containing the first hash value (104) of the virtual document (210) exists, without an entry containing a notarisation confirmation existing, confirming the existence of the virtual document (210).

13. The method according to claim 12, wherein the confirmation of the existence of the virtual document (210) comprises a notice of a possible notarisation by payment of the notarisation fee, and/or
wherein the method further comprises:
if the entry containing the first hash value (104) of the virtual document (210) exists and an entry containing a notarisation confirmation for the first hash value (104) exists, confirming the notarisation of the virtual document (210).

14. A system comprising a first computer system (200) which is associated with an issuer and which is configured to carry out a method according to one of claims 1 to 13.

15. The system according to claim 14, which further comprises a first management computer system (500, 600), which is associated with a first management entity and which is configured to carry out a method according to one of claims 5 to 13, and/or
which further comprises a second management computer system (500), which is associated with a second management entity and which is designed to carry out a method according to one of claims 8 to 13, and/or
which further comprises a third computer system (400), which is configured to carry out a method according to one of claims 12 to 13, and/or
which further comprises at least one blockchain server (100, 130), which is configured to carry out a method according to one of claims 1 to 13.

## Revendications

1. Procédé d'établissement d'un document virtuel (210) au moyen d'un premier système informatique (200) d'un émetteur, dans lequel le premier système informatique (200) comprend une mémoire (202), dans lequel une clé cryptographique publique (208) d'une paire de clés asymétrique associée à l'émetteur est stockée dans la mémoire (202), dans lequel une clé cryptographique privée (206) de la paire de clés asymétrique de l'émetteur est stockée dans une zone de mémoire (204) sécurisée de la mémoire (202), dans lequel le premier système informatique (200) comprend une interface de communication (216) pour la communication par le biais d'un réseau (160),
dans lequel le document virtuel (210) est édité moyennant l'emploi d'une chaîne de blocs (110), la chaîne de blocs (110) comprenant un module de programme (148) avec des premières et deuxièmes instructions de programme dans un bloc (116), dans lequel, par l'exécution des instructions de programme, des saisies (112) associées au module de programme (148) sont créées dans la chaîne de blocs (110),
où le procédé comprend :
• l'établissement d'une demande d'enregistrement par le premier système informatique (200), la demande d'enregistrement comprenant la clé cryptographique publique (208) de l'émetteur et identifiant le module de programme (148),
• l'envoi de la demande d'enregistrement par le premier système informatique (200) à un premier serveur de chaîne de blocs (100, 130) par le biais du réseau, le premier serveur de chaînes de blocs (100, 130) étant conçu pour créer des blocs de la chaine de blocs (110),
• la réception de la demande d'enregistrement par le serveur de chaines de blocs (100, 130),
• l'exécution des premières instructions de programme du module de programme (148) identifié par la demande d'enregistrement par le premier serveur de chaine de blocs (100, 130), l'exécution des première instructions de programme comprenant une vérification de la validité de la demande d'enregistrement, et, dans le cas d'une demande d'enregistrement valide, pour l'enregistrement de la clé cryptographique publique (208) de l'émetteur, une création d'un premier bloc supplémentaire de la chaine de blocs (110), le premier bloc créé comprenant une première entrée associée au module de programme (148) avec la clé cryptographique publique (208) de l'émetteur,
• la réception d'une demande par le premier système informatique (200) pour émettre le document virtuel (210),
• l'établissement du document virtuel (210) par le premier système informatique (200),
• le calcul d'une première valeur de hachage (104) du document virtuel (210) par le premier système informatique (200),
• l'établissement d'une demande d'enregistrement signée avec la clé cryptographique privée (206) de l'émetteur par le premier système informatique (200), la demande d'enregistrement comprenant la première valeur de hachage (104) et identifiant le module de programme (148),
• l'envoi de la demande d'enregistrement signée par le premier système informatique (200) à un deuxième serveur de chaînes de blocs (100, 130), lequel est conçu pour créer des blocs de la chaîne de blocs (110), par le biais du réseau,
• la réception de la demande d'enregistrement signée par le deuxième serveur de chaines de blocs (100, 130),
• l'exécution des deuxièmes instructions de programme du module de programme (148) identifié par la demande d'enregistrement signée par le deuxième serveur de chaînes de blocs (100, 130), l'exécution des deuxièmes instructions de programme comprenant une vérification de la signature de la demande d'enregistrement moyennant l'emploi de la clé cryptographique publique (208) de l'émetteur enregistrée dans la chaîne de blocs (110), et, dans le cas d'une signature valide, pour l'établissement du document virtuel (210), une création d'un deuxième bloc (112) supplémentaire de la chaîne de blocs (110), le deuxième bloc (114) créé comprenant un deuxième enregistrement associé au module de programme (148) avec la première valeur de hachage (104).

2. Procédé selon la revendication 1, dans lequel la demande d'enregistrement comprend un mot de passe d'enregistrement et dans lequel la vérification de la validité de la demande d'enregistrement comprend une vérification de la validité du mot de passe d'enregistrement.

3. Procédé selon l'une des revendications précédentes, le procédé comprenant en outre :
l'envoi du document virtuel (210) à un deuxième système informatique (300) en réponse à la demande d'établissement du document virtuel (210),
et/ou
dans lequel la demande d'enregistrement comprend en outre un identifiant ID d'émetteur, lequel est enregistré lors d'une vérification réussie du mot de passe d'enregistrement conjointement avec la clé cryptographique publique (208) dans le deuxième bloc (112) de la chaine de blocs (110), et/ou
dans lequel la vérification du mot de passe d'enregistrement comprend :
• la comparaison du mot de passe d'enregistrement reçu par le premier serveur de chaînes de blocs (100, 130) avec un mot de passe d'enregistrement stocké dans la chaîne de blocs (110),
• dans le cas d'une concordance du mot de passe d'enregistrement reçu et du mot de passe d'enregistrement stocké, la confirmation de la validité du mot de passe d'enregistrement reçu par le premier serveur de chaînes de blocs (100, 130), et/ou
dans lequel, dans le cas du document virtuel (210), il s'agit d'un certificat virtuel.

4. Procédé selon l'une des revendications précédentes, dans lequel le mot de passe d'enregistrement est fourni sous la forme d'une deuxième valeur de hachage stockée signée dans la chaîne de blocs (110), dans lequel la comparaison du mot de passe d'enregistrement reçu avec le mot de passe d'enregistrement stocké comprend :
• la vérification de la validité de la signature de la deuxième valeur de hachage stockée,
• le calcul d'une troisième valeur de hachage du mot de passe d'enregistrement reçu,
• la comparaison de la troisième valeur de hachage calculée avec la deuxième valeur de hachage stockée.

5. Procédé selon la revendication 4, dans lequel le module de programme (148) comprend des troisièmes instructions de programme et dans lequel la fourniture du mot de passe d'enregistrement comprend :
• le calcul de la deuxième valeur de hachage du mot de passe d'enregistrement par un premier système informatique de gestion (500, 600) d'une première instance de gestion,
• la signature de la deuxième valeur de hachage avec une clé cryptographique privée (506, 606) d'une paire de clés asymétrique associée à la première instance de gestion,
• l'établissement d'une demande de fourniture par le premier système informatique de gestion (500, 600), où la demande de fourniture comprend la deuxième valeur de hachage signée et identifie le module de programme (148),
• l'envoi de la demande de fourniture par le premier système informatique de gestion (500, 600) à un troisième serveur de chaînes de blocs (100, 130) lequel est conçu pour créer des blocs dans la chaîne de blocs (110),
• la réception de la demande de fourniture par le troisième serveur de chaînes de blocs (100, 130),
• l'exécution des troisièmes instructions de programme du module de programme (148) identifié par la demande de fourniture par le troisième serveur de chaînes de blocs (100, 130), l'exécution des troisièmes instructions de programme comprenant une vérification de la signature de la deuxième valeur de hachage par le troisième serveur de chaînes de blocs (100, 130) moyennant l'emploi d'une clé cryptographique publique (505, 608) de la paire de clés asymétrique associée à la première instance de gestion , et, dans le cas d'une signature valide, la création d'un troisième bloc de chaine de blocs (110) supplémentaire par le troisième serveur de chaînes de blocs (100, 130), le troisième bloc créé comprenant un troisième enregistrement associé au module de programme (148) avec la deuxième valeur de hachage signée.

6. Procédé selon la revendication 5, dans lequel la clé cryptographique publique (508, 608) de la première instance de gestion est stockée dans la chaîne de blocs (110) et le troisième serveur de chaînes de blocs (100, 130) emploie la clé cryptographique publique (508, 608) du premier système informatique de gestion (500, 600) stockée dans la chaîne de blocs (110) pour la vérification de la signature de la deuxième valeur de hachage.

7. Procédé selon l'une des revendications 5 à 6, le procédé comprenant en outre :
• l'envoi d'une demande de mot de passe pour l'obtention du mot de passe d'enregistrement par le premier système informatique (200) au premier système informatique de gestion (500, 600), la demande de mot de passe identifiant l'émetteur,
le procédé comprenant, en outre, par la première instance de gestion, moyennant l'emploi du premier système information de gestion (500, 600) :
• la réception de la demande de mot de passe,
• l'identification d'une adresse postale associée à l'émetteur,
• l'établissement d'un texte écrit de réponse, lequel comprend le mot de passe d'enregistrement, adressé à l'adresse postale identifiée,
• l'envoi du texte écrit de réponse par la poste,
ou le procédé comprenant en outre :
• l'envoi d'une demande de mot de passe pour l'obtention du mot de passe d'enregistrement par le premier système informatique (200) au premier système informatique de gestion (500, 600), la demande de mot de passe identifiant l'émetteur,
le procédé comprenant, en outre, par la première instance de gestion, moyennant l'emploi du premier système information de gestion (500, 600) :
• la réception de la demande de mot de passe,
• l'établissement d'une réponse à la demande de mot de passe d'enregistrement, laquelle comprend le mot de passe d'enregistrement,
• l'envoi de la réponse sous forme sécurisée de manière cryptographique au premier système informatique (200) de l'émetteur.

8. Procédé selon l'une des revendications précédentes, le procédé comprenant en outre :
• l'établissement du module de programme (148) par un deuxième système informatique de gestion (500) d'une deuxième instance de gestion
• l'établissement d'une demande d'initialisation signée par le deuxième système informatique de gestion (500) avec le module de programme (148),
• l'envoi de la demande d'initialisation par le deuxième système informatique de gestion (500) à un quatrième serveur de chaînes de blocs (100, 130), lequel est conçu pour créer des blocs de la chaîne de blocs (110),
• la réception du module de programme (148) par le quatrième serveur de chaîne de blocs (100, 130),
• la vérification de la signature de la demande d'initialisation par le quatrième serveur de chaines de blocs (100, 130) moyennant l'emploi de la clé cryptographique publique (508, 608) de la paire de clés asymétrique associée à la deuxième instance de gestion, et, dans le cas d'une signature valide, la création d'un quatrième bloc (116) supplémentaire de la chaîne de blocs (110) par le quatrième serveur de chaînes de blocs (100, 130), le quatrième bloc (116) créé comprenant un quatrième enregistrement (118) avec le module de programme (148).

9. Procédé selon l'une des revendications précédentes, dans lequel le module de programme (148) comprend des quatrièmes instructions de programme et où le procédé comprend en outre :
• la réception d'une première confirmation de paiement de frais de certification pour l'établissement du document virtuel (210) par le deuxième système informatique de gestion (500),
• l'établissement d'une première confirmation de certification par le deuxième système informatique de gestion (500), la confirmation de certification comprenant la première valeur de hachage (104) signée du document virtuel (210) et identifiant le module de programme (148),
• la signature de la première confirmation de certification par le deuxième système informatique de gestion (500) avec la clé cryptographique privée (506) de la deuxième instance de gestion,
• l'envoi de la première confirmation de certification signée à un cinquième serveur de chaînes de blocs (100, 130), lequel est conçu pour créer des blocs de la chaîne de blocs (110),
• la réception de la première confirmation de certification par le cinquième serveur de chaînes de blocs (100, 130),
• l'exécution des quatrièmes instructions de programme du module de programme (148) identifié par la confirmation de certification par le cinquième serveur de chaînes de blocs (100, 130), l'exécution des quatrièmes instructions de programme comprenant une vérification de la signature de la première confirmation de certification par le cinquième serveur de chaînes de blocs (100, 130) moyennant l'emploi de la clé cryptographique publique (508) de la deuxième instance de gestion , et, dans le cas d'une signature valide, la création d'un cinquième bloc de chaine de blocs (110) supplémentaire par le cinquième serveur de chaînes de blocs (100, 130), le cinquième bloc créé comprenant un cinquième enregistrement associé au module de programme (148) avec la première confirmation de certification signée.

10. Procédé selon la revendication 9, dans lequel le module de programme (148) comprend des cinquièmes instructions de programme et où le procédé comprend en outre :
• la création d'une instruction de transaction par le deuxième système informatique de gestion (500) concernant la transaction d'au moins un montant partiel de la taxe de certification sous la forme de cyber monnaie, mise en œuvre dans la chaîne de blocs (110) à partir d'une adresse de départ associée à la deuxième instance de gestion vers une adresse cible associée à l'émetteur,
• la signature de l'instruction de transaction avec une clé cryptographique privée (506) d'une paire de clés asymétrique associée à l'adresse de départ,
• l'envoi de l'instruction de transaction signée à un sixième serveur de chaînes de blocs (100, 130), lequel est conçu pour créer des blocs de la chaîne de blocs (110),
• la réception de l'instruction de transaction par le sixième serveur de chaînes de blocs (100, 130),
• l'exécution des cinquièmes instructions de programme du module de programme (148) identifié par la confirmation de certification par le sixième serveur de chaînes de blocs (100, 130), l'exécution des cinquièmes instructions de programme comprenant une vérification de la signature de l'instruction de transaction par le sixième serveur de chaînes de blocs (100, 130) moyennant l'emploi de l'adresse de départ, et, dans le cas d'une signature valide, la création d'un sixième bloc de chaine de blocs (110) supplémentaire par le sixième serveur de chaînes de blocs (100, 130), le sixième bloc créé comprenant un sixième enregistrement associé au module de programme (148) avec l'instruction de transaction.

11. Procédé selon l'une des revendications 1 à 8, dans lequel le module de programme (148) comprend des sixièmes instructions de programme et où le procédé comprend en outre :
• la réception d'une deuxième confirmation de paiement de frais de certification pour l'établissement du document virtuel (210) par le premier système informatique de gestion (200),
• l'établissement d'une deuxième confirmation de certification par le premier système informatique de gestion (200), la confirmation de certification comprenant la première valeur de hachage (104) signée du document virtuel (210) et identifiant le module de programme (148),
• la signature de la deuxième confirmation de certification par le premier système informatique de gestion (200) avec la clé cryptographique privée (206) de l'émetteur,
• l'envoi de la deuxième confirmation de certification signée à un septième serveur de chaînes de blocs (100, 130), lequel est conçu pour créer des blocs de la chaîne de blocs (110),
• la réception de la deuxième confirmation de certification par le septième serveur de chaînes de blocs (100, 130),
• l'exécution des sixièmes instructions de programme du module de programme (148) identifié par la deuxième confirmation de certification par le septième serveur de chaînes de blocs (100, 130), l'exécution des sixièmes instructions de programme comprenant une vérification de la signature de la deuxième confirmation de certification par le septième serveur de chaînes de blocs (100, 130) moyennant l'emploi de la clé cryptographique publique (208) de l'émetteur, et, dans le cas d'une signature valide, la création d'un septième bloc de chaine de blocs (110) supplémentaire par le septième serveur de chaînes de blocs (100, 130), le septième bloc créé comprenant un septième enregistrement associé au module de programme (148) avec la deuxième confirmation de certification signée.

12. Procédé selon l'une des revendications précédentes, le procédé comprenant en outre :
• la réception du document virtuel (210) par un troisième système informatique (400),
• le calcul de la première valeur de hachage (104) du document virtuel (210) par le troisième système informatique,
• l'interrogation de la chaîne de blocs (110) au sujet d'un enregistrement avec la première valeur de hachage (104) du document virtuel (210) par le troisième système informatique (400),
• dans le cas de l'existence du premier enregistrement avec la première valeur de hachage (104) du document virtuel (210), sans qu'un enregistrement avec une confirmation de certificat n'existe, la confirmation de l'existence du document virtuel (210).

13. Procédé selon la revendication 12, dans lequel la confirmation de l'existence du document virtuel (210) comprend une indication concernant une certification possible par le paiement d'une taxe de certification, et/ou
le procédé comprenant en outre :
dans le cas de l'existence de l'enregistrement avec la première valeur de hachage (104) du document virtuel (210) ainsi que d'un enregistrement avec une confirmation de certification pour la première valeur de hachage (104), la confirmation de la certification du document virtuel (210).

14. Système, lequel comprend un premier système informatique (200) associé à un émetteur qui est conçu pour l'exécution d'un procédé selon l'une des revendications 1 à 13.

15. Système selon la revendication 14, lequel comprend en outre un premier système informatique de gestion (500, 600) qui est associé à une première instance de gestion et est conçu pour l'exécution d'un procédé selon l'une des revendications 5 à 13,
et/ou
lequel comprend en outre un deuxième système informatique de gestion (500) qui est associé à une deuxième instance de gestion et est conçu pour l'exécution d'un procédé selon l'une des revendications 8 à 13, et/ou
lequel comprend en outre un troisième système informatique (400) qui est conçu pour l'exécution d'un procédé selon l'une des revendications 12 à 13, et/ou
lequel comprend en outre au moins un serveur de chaînes de blocs (100, 130) lequel est conçu pour l'exécution d'un procédé selon l'une des revendications 1 à 13.
